# EUROPÄISCHE PATENTSCHRIFT

(11) **EP 2 283 368 B1**
(45) Veröffentlichungstag und Bekanntmachung des Hinweises auf die Patenterteilung: **15.08.2012**
(21) Anmeldenummer: 09745524.0
(22) Anmeldetag: 07.05.2009
(51) Int. Cl.: G01N 35/02

(54) **ANALYSEGERÄT**
ANALYSIS APPARATUS
APPAREIL POUR L'ANALYSE

(30) Priorität: 12.05.2008 DE 102008022835
(43) Veröffentlichungstag der Anmeldung: 16.02.2011
(73) Patentinhaber: Matthias, Torsten, 55234 Wendelsheim (DE)
(72) Erfinder: RIBEIRO, Hugo, 55124 Mainz (DE); SCHIMON, Hans-Peter, 73092 Heiningen (DE); VAN PRAET, Peter, 3053 Haasrode (DE); MATTHIAS, Torsten, 55234 Wendelsheim (DE)
(74) Vertreter: Fritzsche, Thomas
(86) Internationale Anmeldenummer: PCT/EP2009/003272
(87) Internationale Veröffentlichungsnummer: WO 2009/138190

(56) Entgegenhaltungen:
- WO-A1-2006/000115
- JP-A- 1 006 760

## Beschreibung

Die Erfindung betrifft eine Vorrichtung, insbesondere ein Analysegerät, und ein System zum Untersuchen von biologischen oder chemischen Proben mittels einer über eine Pipette zugeführten Reagenzflüssigkeit sowie ein Verfahren zum Untersuchen von biologischen oder chemischen Proben mittels einer über eine Pipette zugeführten Reagenzflüssigkeit, wobei die Proben jeweils in Probenbehältern gehalten werden, die auf der Arbeitsplattform angeordnet sind.

### Stand der Technik

Aus der Druckschrift WO 2006/000115 A1 ist eine Vorrichtung und ein Verfahren zum Anordnen von Pipetten- oder Dispenser-Spitzen in einem System zum Manipulieren von Flüssigkeitsproben bekannt. Eine solche Vorrichtung umfasst einen Robotermanipulator zum Ausrichten von Pipetten- oder Dispenser-Spitzen in einer X-Richtung und in einer im Wesentlichen rechtwinklig dazu verlaufenden Y- Richtung bezüglich in oder auf dem System angeordneten Probenbehältern. Solche Vorrichtungen umfassen zudem Pipetten- oder Dispenser-Spitzen, die sich im Wesentlichen vertikal erstrecken und die in einer im Wesentlichen senkrecht zu den X- und Y- Richtungen verlaufenden Z-Richtung anhebbar und absenkbar sind. Des Weiteren umfassen solche Vorrichtungen Antriebe zum Bewegen des Robotermanipulators und Prozessoren zum Steuern der Bewegungen und Aktionen des Robotermanipulators bzw. der Pipetten- oder Dispenser-Spitzen. Für die Verwendung bei der Untersuchung von Genen ("Genomics"), Proteinen ("Proteomics") zum Entdecken von neuen Wirkstoffen ("Drug Discovery") und in der klinischen Diagnose ("Clinical Diagnostics") sind entsprechende Vorrichtungen und Systeme, wie die von der Firma Tecan Trading AG, Seestraße 103, CH-8708 Männerdorf unter dem Namen "Genesis Robotic Sample Processor" vertriebene Arbeitsplattform bekannt. Es handelt sich dabei um eine Vorrichtung zum Manipulieren von Proben in Behältern und/oder auf Objektträgern, wobei die Behälter und/oder Objektträger auf einem, im wesentlichen horizontalen Arbeitsfeld mit einer Längsausdehnung X und einer Querausdehnung Y angeordnet sind und wobei die Vorrichtung Robotermanipulatoren zum Manipulieren der Proben umfasst. Dieses Manipulieren kann das Aufnehmen und/oder Abgeben von Flüssigkeiten, z. B. innerhalb dieses X-Y-Feldes betreffen. Außerdem können Zentrifugen und andere Bearbeitungsstationen oder Analysestationen für Proben, wie Fluoreszenz-Reader und dergleichen vorgesehen sein. Wichtig ist für solche Arbeitsplattformen auch das Identifizieren von Objekten, wie Probenröhrchen, Mikrotiterplatten und andere Proben enthaltende Behälter mit einer entsprechenden Detektionsvorrichtung, wie einem Strichcodeleser ("Barcode-Reader") oder dergleichen: Solche bekannten Arbeitsplattformen umfassen zum Zweck des Liquidhandlings vorzugsweise einen Robotermanipulator mit einem sich in Y-Richtung erstreckenden Arm und zumindest einer sich in X-Richtung erstreckenden Schiene, an welcher der Arm in X-Richtung hin und her bewegbar befestigt ist, die sich im wesentlichen vertikal erstrecken und die in dieser im wesentlichen senkrecht zum Arbeitsfeld verlaufenden Z-Richtung anhebbar und absenkbar sind, sowie Antriebe zum Bewegen des Robotermanipulators und Prozessoren zum Steuern der Bewegungen und Aktionen des Robotermanipulators und/oder der Pipettenspitzen. Weiterhin befinden sich Flüssigkeitsproben, welche bearbeitet bzw. untersucht werden sollen, üblicherweise in Röhrchen oder in den Wells von Mikrotiterplatten. Solche Röhrchen werden in geeignete Halter gestellt, so dass jeder Halter eine Reihe von Röhrchen aufnehmen kann, welche dadurch in Y-Richtung, also in Richtung der Querausdehnung der Arbeitsplattform in einer Linie nebeneinander angeordnet werden. Diese Halter sind vorzugweise auf dem Arbeitstisch geführt verschiebbar. Flüssigkeitsproben können sich auch in den Wells von Mikrotiterplatten befinden, bzw. aus den Probenröhrchen in diese Wells umpipettiert worden sein. Dabei werden üblicherweise drei Mikrotiterplatten auf einem so genannten "Carrier" angeordnet, welcher vorzugsweise ebenfalls auf dem Arbeitstisch geführt verschiebbar ist.

Aus der Druckschrift CH 696 030 A5 ist weiterhin eine solche Vorrichtung zum Manipulieren von Proben in Behältern und/oder auf Objektträgern im Bereich eines X-Y-Feldes bekannt, bei welcher der erste und der zweite Robotermanipulator zumindest den ganzen Bereich des X-Y-Feldes bearbeiten können, praktisch ohne sich gegenseitig zu beeinträchtigen. Die Aktionsbereiche der beiden Robotermanipulatoren können dabei frei gewählt werden. Der zweite Robotermanipulator kann mit oder ohne Objekte beladen den ersten Robotermanipulator passieren. Das Umplatzieren von unterschiedlichsten Objekten mit dem zweiten Robotermanipulator, wie z.B. das Versetzen von aktiven Geräten in Form von Scannern (1D, 2D), Kameras, Druckköpfen, etc. ermöglicht das Nutzen der Funktionen dieser Geräte auf dem ganzen Feld der Arbeitsplattform. Dabei können diese aktiven Geräte mit dem zweiten Robotermanipulator auch von außerhalb des Feldes geholt bzw. zeitweise dort weggelegt werden. Durch eine zusätzliche Ausfahrbarkeit des zweiten Robotermanipulators können dabei auch Ebenen unterhalb des eigentlichen Arbeitsfeldes bedient werden. Weil der Transport von Objekten und das Liquid Handling Arbeiten sind, die oft nicht synchron zueinander verlaufen, werden zwei voneinander unabhängige Robotermanipulatoren vorgeschlagen.

Aus der Druckschrift EP 1 829 613 A1 ist eine Aufbewahrungseinheit für biologische Proben, mit einer im Wesentlichen horizontalen Hauptstandfläche und mehreren Aufbewahrungskammern offenbart. In biologischen Labors, insbesondere in den Labors von pathologischen Instituten von Universitäten oder Spitälern, werden biologische Proben, z.B. durch Biopsie gewonnene Gewebeproben, sehr oft als Gewebestücke in Kassetten oder als Dünnschnitte auf Glasobjektträgern aufbewahrt. Eine Auswahl solcher Kassetten und Glasobjektträger wird z.B. von der Firma. Thermo Shandon angeboten in der Pharmaforschung werden chemische oder biochemische Verbindungen routinemäßig auf ihre potenzielle pharmazeutische Aktivität geprüft. Zu diesem Zweck muss eine große Anzahl von Proben innerhalb kürzester Zeit bereitgestellt werden. In Laboratorien der Pharmaforschung werden deshalb so genannte Mikroröhrchen ("Micro-Tubes") verwendet, welche eine genügende Menge einer bestimmten Substanz enthalten. Um möglichst ökonomisch mit den riesigen Zahlen solcher Mikroröhrchen umgehen zu können, werden diese in so genannte "Micro-Tube Cluster Racks" gepackt. Dabei sind zum robotisierten Handling solche Racks speziell bevorzugt, welche eine Standfläche aufweisen, die dem sogenannten "Foot Print" einer Mikrotiterplatte nach dem SBS-Standard (SBS = Society for Biomolecular Screening) entspricht und deshalb oft als "SBS footprint" bezeichnet wird. Inzwischen wurde dieser Standard vom ANSI (American National Standards Institute) als ANSI/SBS 1-2004 normiert. Micro-Tube Cluster Racks mit 96 oder 384 Mikro-Röhrchen sind beispielsweise unter dem Handelsnamen REMP Tube Technology^{™} bekannt. Dagegen werden Dünnschnitte von fixierten, beispielsweise in Paraffin eingebetteten Proben in der Pathologie routinemäßig auf Glasobjektträgem aufgetragen und mittels Lichtmikroskopie beurteilt.

Aus der Druckschrift WO 2005/103725 A1 ist weiterhin eine Vorrichtung für das Transportieren oder Untersuchen von Flüssigkeiten in einem System zum Arbeiten mit Flüssigkeitsproben bekannt. Solche Systeme umfassen beispielsweise ein im Wesentlichen horizontales, sich in einer X-Richtung und in einer dazu rechtwinkligen Y-Richtung ausdehnendes Arbeitsfeld. Die Vorrichtung umfasst zumindest ein Funktionselement mit wenigstens einem funktionellen Ende, wobei die Funktionselemente im Wesentlichen senkrecht zum Arbeitsfeld in einer Z-Richtung ausgerichtet sind. Die Vorrichtung umfasst zumindest eine Kippeinheit zum kippbaren Halten des zumindest einen Funktionselements. Ein solches System umfasst zumindest einen Robotarm, an welchem zumindest eine solche Vorrichtung befestigt ist. Ein solcher Robotarm ist dann zum Bewegen des Funktionselements in zumindest einem Teilbereich des Arbeitsfelds und zumindest in der Z-Richtung ausgebildet. Im technischen Gebiet des LiquidHandlings sind Vorrichtungen zum Aufnehmen und Abgeben von Flüssigkeitsproben als Pipetten oder Pipettiergeräte bekannt. Vorrichtungen, die lediglich zum Abgeben von Flüssigkeitsproben verwendet werden können, nennt man üblicherweise Dispenser. Zum Automatisieren des Pipettierprozesses von Volumina unterhalb 10 µl müssen zwei Vorgänge voneinander unterschieden werden: definierte Aufnahme (Aspiration) und die anschließende Abgabe (Dispensierung) von Flüssigkeitsproben. Zwischen diesen Vorgängen, wird üblicherweise die Pipettenspitze vom Experimentator oder einem Automaten bewegt, so dass der Aufnahmeort einer Flüssigkeitsprobe von deren Abgabeort oft verschieden ist. Für die Richtigkeit und Reproduzierbarkeit einer Aufnahme und/oder Abgabe ist nur das Flüssigkeitssystem wesentlich, welches aus Pumpe (z. B. ein als Spritzenpumpe ausgebildeter Diluter), Flüssigkeitsleitung und Endstück (Pipettenspitze) besteht. Das Abgeben einer Flüssigkeit mit einer Pipettenspitze kann aus der Luft ("from Air") oder über das Berühren einer Oberfläche geschehen. Diese Oberfläche kann die feste Oberfläche eines Gefäßes ("on Tip Touch") sein, in welches die Flüssigkeitsprobe abgegeben werden soll. Es kann auch die Oberfläche einer sich in diesem Gefäß befindlichen Flüssigkeit ("on Liquid Surface") sein. Ein an das Dispensieren anschließender Mischvorgang ist - besonders bei sehr kleinen Probenvolumina im Nano- oder gar Picoliter-Bereich zu empfehlen, damit eine gleichmäßige Verteilung des Probenvolumens in einer Reaktionsflüssigkeit gewährleistet ist. Aus der Druckschrift DE 101 16 642 C1 ist eine Vorrichtung bekannt, mit welcher Flüssigkeiten in die Wells einer Mikrotiterplatte abgegeben oder aus solchen Behältern pipettiert werden können. Arbeitsplattformen oder Systeme zum Behandeln von Flüssigkeiten, wie zum Beispiel das Pipettieren von Flüssigkeiten aus Behältern sind z. B. aus der Druckschrift US 5,084,242 bekannt, bei der auch eine Kippeinheit zum kippbaren Halten des zumindest die Flüssigkeit abgebenden Pipettiergerätes vorgeschlagen wird.

In der Druckschrift DE 10 2007 018 483 A1 sind Arbeitsplattformen zum Behandeln von Flüssigkeiten, wie zum Beispiel das Pipettieren von Flüssigkeiten aus Behältern und zum Verteilen derselben in den Wells einer Mikrotiterplatte beschrieben, die aus der Druckschrift WO 02/059626 A1 mit dem Titel "Pipettiervorrichtung" und aus der Druckschrift EP 1 477 815 A1 mit dem Titel "Vorrichtung zum präzisen Anfahren von Mikroplatten-Wells" bekannt sind. Es handelt sich dabei vorzugsweise um Arbeitsplattformen, bei denen z.B. eine Pipettenspitze an einem bestimmten Ort automatisiert positioniert werden kann. Insbesondere offenbart die Druckschrift EP 1 477 815 A1 ein speziell präzises Positionieren von Objekten gegenüber den 1536 Wells einer Mikrotiterplatte, so dass das Beschädigen einer Pipettenspitze, eines Temperaturfühlers, einer pH-Sonde, oder eines anderen, länglichen, dünnen Objekts, das in einem Well positioniert werden soll, durch ein Anstoßen an die Wände des Wells bzw. die Oberfläche der Mikrotiterplatte verhindert werden kann. Zudem können so Probenverluste, das Kontaminieren von Nachbarproben und des Arbeitsplatzes praktisch ausgeschlossen werden. Ein präzises Anfahren der Wells, bei dem keine Gefahr einer ungewollten Berührung von Teilen der Mikrotiterplatte besteht, ist deshalb eine Grundvoraussetzung für ein routinemäßiges Arbeiten mit einem Liquid-Handling-System, das z.B. zum automatischen Untersuchen von Blutproben eingesetzt werden kann. Ein präzises Anfahren soll nicht nur in der durch die X- und Y-Richtungen definierten, im wesentlichen horizontalen Ebene eines kartesischen Koordinatensystems gewährleistet werden; auch die Z- oder Höhen-Position einer funktionellen Spitze eines länglichen, dünnen Objekts, wie z.B. einer Pipettenspitze, eines Temperaturfühlers, eines Lichtleiters oder einer pH-Sonde, soll in einem kartesischen oder auch in einem polaren Koordinatensystem möglichst präzise und reproduzierbar positioniert werden können.

In der Druckschrift WO 2007/071613 A1 wird weiterhin eine Vorrichtung zum Konditionieren einer Systemflüssigkeit für ein Liquidhandlinggerät offenbart, worin auf folgenden Stand der Technik hingewiesen wird. Industriezweige, die sich z.B. in der pharmazeutischen Forschung bzw. in der klinischen Diagnostik mit biochemischen Techniken befassen, benötigen Anlagen zum Verarbeiten von Flüssigkeitsvolumina und Flüssigkeitsproben. Automatisierte Anlagen umfassen üblicherweise ein Liquidhandlinggerät, wie z.B. ein einzelnes Pipetiergerät oder mehrere Pipetiergeräte, welche an Flüssigkeitsbehältern eingesetzt werden, die sich auf dem Arbeitstisch einer Arbeitsstation bzw. einer so genannten "Liquidhandling Workstation" befinden. Solche Arbeitsstationen sind oftmals fähig, unterschiedlichste Arbeiten an diesen Flüssigkeitsproben auszuführen, wie z.B. optische Messungen, Pipettieren, Waschen, Zentrifugieren, Inkubieren und Filtrieren. Ein oder mehrere Roboter, operieren diese nun nach kartesischen oder polaren Koordinaten, können zur Probenbearbeitung an einer solchen Arbeitsstation eingesetzt werden. Solche Roboter können Flüssigkeitsbehälter, wie. z.B. Probenröhrchen oder Mikrotiterplatten tragen und umplatzieren. Solche Roboter können auch als so genannte "Robotic Sample Processor" (RSP), wie z.B. als Pipetiergerät zum Aspirieren und Dispensieren, oder als Dispenser zum Verteilen von Flüssigkeitsproben eingesetzt werden. Vorzugsweise werden solche Anlagen durch einen Rechner kontrolliert und gesteuert. Ein entscheidender Vorteil solcher Anlagen besteht darin, dass große Zahlen von Flüssigkeitsproben über lange Zeiträume von Stunden und Tagen automatisch bearbeitet werden können, ohne dass ein menschlicher Operator in den Bearbeitungsprozess eingreifen muss. Solche Anlagen können ganze Testserien automatisiert bearbeiten. Solche Testserien, wie z.B. die sogenannten "ELISA-Tests" ("ELISA" = "Enzyme-Linked Immuno Sorbent Assay") sind aus der heutigen Klinischen Diagnostik und Live Science Forschung nicht mehr wegzudenken. Zum Automatisieren im Liquidhandling müssen zwei Vorgänge grundsätzlich voneinander unterschieden werden: Die definierte Aufnahme (Aspiration) und die anschließende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort verschieden ist.

In der EP 1 206 967 A2 wird ein Stand der Technik beschrieben, wonach es bekannt ist, dass Tropfen mit einem Volumen von mehr als 10 µl sehr einfach aus der Luft abgegeben werden können, weil die Tropfen bei korrektem Umgang mit der Pipette von selbst die Pipettenspitze verlassen. Die Tropfengröße wird dann durch die physikalischen Eigenschaften der Probenflüssigkeit, wie Oberflächenspannung oder Viskosität bestimmt. Die Tropfengröße limitiert somit die Auflösung der abzugebenden Menge Flüssigkeit. Die Aufnahme und Abgabe, d.h. das Pipettieren von Flüssigkeitsproben mit einem Volumen von weniger als 10 µl verlangt dagegen meist Instrumente und Techniken, weiche die Abgabe solch kleiner Proben garantieren. Systeme zum Abtrennen von Proben aus einer Flüssigkeit sind als Pipettierautomaten bekannt. Solche Systeme dienen z.B. zur Abgabe von Flüssigkeiten in die Aufnahmetöpfchen von Standard-Mikrotiterplatten^{™} (Handelsmarke von Beckman Coulter, Inc., 4300 N. Harbour Blvd., P.O.Box 3100 Fullerton, CA, USA 92834) bzw. Mikrotiterplatten mit 96 Töpfchen. Die Reduktion der Probenvolumina (z.B. zum Befüllen von hochdichten Mikrotiterplatten mit 384, 864, 1536 oder noch mehr Töpfchen) spielt eine zunehmend wichtige Rolle, wobei der Genauigkeit des abgegebenen Probenvolumens große Bedeutung zukommt. Die Erhöhung der Probenzahl bedingt meistens auch eine Versuchsminiaturisierung, so dass die Verwendung eines Pipettierautomaten unumgänglich wird und spezielle Anforderungen an die Genauigkeit von Probenvolumen sowie die Zielsicherheit der Bewegungsführung bzw. des Dispenses dieses Pipettierautomaten gestellt werden müssen. Einfachere Pipettierautomaten, so genannte "offene Systeme", verbinden das Vorratsgefäß für die zu pipettierende Flüssigkeit mit der Pipettenspitze über eine Leitung, in welche eine Dispenserpumpe zwischengeschaltet werden kann. Dispenserpumpen sind zumeist als Kolben-Pumpen ausgebildet. Zum Aufnehmen (Aspirieren) der Probe wird die Pumpe allein in Betrieb gesetzt, die Pipettenspitze leitet lediglich passiv den Flüssigkeitsstrom weiter. Zum Abgeben bzw. Dispensieren eines Probenvolumens wird dann die Pumpe ausgeschaltet oder überbrückt. Aus EP 0 725 267 A2 ist z.B. eine Pipettenspitze in der Form einer Mikroejektionspumpe bekannt, mit welcher aktiv eine Flüssigkeitsprobe abgetrennt wird. Das Nachliefern der Flüssigkeit geschieht durch den in der Leitung zwischen Vorratsgefäß und Pipettenspitze herrschenden, hydrostatischen Druck.

Beim bisherigen Stand der Technik, wie z.B. aus den Druckschriften WO 2006/000115 A1, WO 02/059626 A1 und EP 1 477 815 A1 bekannt, ist es üblich, dass bei Mikrotiterplatten entweder alle acht Wells oder Positionen einer Mikrotiterplatte mit acht äquidistant angeordneten Hohlnadeln gleichzeitig befüllt und gewaschen und mit Reagenz versehen werden. Gemäß einem weiteren Stand der Technik werden diese Mikrotiterplatten mit einer Hohlnadel nacheinander befüllt und ebenfalls nacheinander gewaschen und entsprechend ausgesaugt. Dieses Verfahren hat zum Nachteil, dass hier durch die nacheinander ablaufende Befüllung durchaus Zeitunterschiede entstehen, sodass zwischen der Inkubations-/Reaktionszeit, welche im ersten Well (Reaktionsraum) stattfindet und denjenigen im letzten Well durchaus ein Zeitunterschied von 10s oder mehr herrscht. Dies führt auch zu unterschiedlichen Ergebnissen Dies trifft insbesondere auch zu, wenn die Wells nach dem Absaugen unterschiedlich lange getrocknet werden, bis das Reagenz entsprechend eingefüllt wird.

Der Erfindung liegt daher die Aufgabe zugrunde, diese Nachteile des Standes der Technik zu vermeiden. Die Erfindung hat auch zum Ziel, dass mit derartigen fertig präparierten Mikrotiterplatten auch meist lediglich mit nur einzelnen Wells getestet werden kann. Da beispielsweise beim Stand der Technik meist mehrere Wells parallel verwendet werden, führt das zu einem erhöhten Verbrauch der teuren Reagenzien.

Diese Aufgabe wird nun erfindungsgemäß durch die Vorrichtung gemäß Anspruch 1 zum Untersuchen von biologischen oder chemischen Proben mittels einer über eine Pipette zugeführten Reagenzflüssigkeit bzw. mittels einer Pipette zu- bzw. abgeführten Reinigungsflüssigkeit, durch das System nach Anspruch 14 unter Verwendung der Vorrichtung nach Anspruch 1 und durch das Verfahren nach Anspruch 15 unter Verwendung der Vorrichtung nach Anspruch 1 gelöst.

Dies wird hierbei dadurch erreicht, dass eng nebeneinander liegend drei separat gesteuerte Hohlnadeln angeordnet werden und zwar derart, dass sie alle drei gleichzeitig über ein einzelnes Well beziehungsweise Näpfchen zu stehen kommen und dann bevorzugt die mittlere Hohlnadel das Reagenz einfüllt. Nach einer Reaktionszeit bzw. Inkubationszeit werden dann die beiden anderen äußeren Hohlnadeln aktiv, d. h. die Lösung wird mittels einer zweiten Hohlnadel abgesaugt und mittels einer dritten Hohlnadel mit einer Waschlösung versehen und darauf folgend wieder mit der zweiten Hohlnadel abgesaugt. Dabei ist es jedoch so, dass sich während eines ganzen Reaktionszyklusses die Hohlnadeln selbst nicht über dem Well bewegen und dass alle Reaktionen bzw. Waschvorgänge ohne dazwischen liegende gegebenenfalls zeitraubende Bewegungsschritte erfolgen. Hierbei ist eine, vorzugsweise die mittlere, das Reagenz eintragende Hohlnadel beweglich gelagert, wobei sie während des Befüllens nach unten bzw. nach oben mittels einer motorgetriebenen Einrichtung auf und ab bewegt wird. Eine derartige Einrichtung ist beispielsweise ein Zahnradmechanismus, ein Spindelmechanismus oder auch ein Ketten- oder Keilriemenantrieb. Im unteren Teil werden alle drei Hohlnadeln in einem zylinderförmigen Führungsteil gehalten, welche für jede Hohlnadel einen separaten Durchlass aufweist.

Die Anordnung der einzelnen Hohlnadeln ist vorzugsweise auch so angeordnet, dass keine Kontamination stattfindet. Dies wird dadurch erreicht, dass die Waschhohlnadel etwas oberhalb der Saughohlnadel angeordnet ist, sodass diese nicht in das Reagenz selbst eintaucht. Die spezielle Anordnung von drei parallelen Hohlnadeln ermöglicht es, diese gemeinsam in einer Vertiefung der Mikrotiterplatte zu platzieren.

Ein weiteres wesentliches Merkmal der Erfindung liegt darin, dass die Nadeleinheit mittels Magneten gehaltert wird. Dies hat den Vorteil, dass bei einem Versagen des Systems oder beispielsweise beim Anstoßen der Hohlnadel an einer im Inneren des Analysegerätes vergessenen Reagenzflasche die Hohlnadeln nicht verbogen oder die Flasche umgeworfen wird, sondern dass die Nadeleinheit aus ihrer Magnethalterung gelöst wird und abfällt. Diese löst einen zusätzlichen Stoppmechanismus aus, so dass dadurch kein Schaden entsteht. Durch seine spezielle Halterung ist die Nadeleinheit vor Beschädigungen bestens geschützt. Hohlnadeln können sich somit beim unbeabsichtigten Aufsetzen auf Oberflächen nicht verbiegen oder abbrechen, da vorher die Nadeleinheit aus ihrer Position gebracht wird. Die Fixierung der aus drei Hohlnadeln bestehenden Nadeleinheit kann dann vom Kunden problemlos wieder durchgeführt werden.

Zwei Hohlnadeln befinden sich in einer festen Position, die Dispensierhohlnadel und die Absaughohlnadel. Die dritte Hohlnadel ist für die Reagenzzugabe verantwortlich und kann durch Motorantrieb die Aufnahme bzw. Abgabe von Reagenz mittels Level-Detektion ermöglichen. Dadurch kann hiermit eine schnelle Reagenzzugabe stattfinden.

Die Reagenzien selber werden mittels einem analog des Standes der Technik funktionierenden Mikrospritzensystem versorgt, welches vorzugsweise über ein Zwei-Wege-Ventil mittels eines dünnen mikroskopischen Schlauchsystems in die jeweilige Probenadel eingeführt wird. Dabei werden diese Mikrospritzen nicht wie beim Stand der Technik aufwendig verschraubt, sondern mittels eines Magneten in Stellung gehalten, was einerseits ein leichtes und rasches Auswechseln problemlos ermöglicht, andererseits den zuvor beschriebenen Stoppmechanismus im Störungsfall auslöst. Das gesamte Nadelsystem ist oberhalb einer über eine drehbare kreisförmige Arbeitsplattform, auf der sich vorzugsweise eine Reagenzienreihe, eine Serenreihe, eine Verdünnungsreihe und Mikrotiterplatten befindet, angeordnet und kann somit jede beliebige Stelle innerhalb der kreisförmigen Arbeitsplattform erreichen. Das Nadelsystem wird beispielsweise mittels einer Roboterkette vor und zurück bewegt bzw. über einen Spindelantrieb durch Drehen eines Gewindestange radial vor und zurück bewegt. Im unteren Bereich des Nadelsystems ist eine ebenfalls mittels eines Magneten gehaltene Peristaltikpumpe angeordnet, welche vorzugsweise die Waschflüssigkeit in die Hohlnadeln pumpt.

Auch die Magnethalterung der Nadeleinheit ist derart ausgeführt, dass die äußeren an einer Halteplatte befestigt sind und die mittlere in einer Führungsnut gleitend auf und ab bewegt wird. Die Magnete sind an der Seite angeordnet und drücken die Halteplatte gegen ein feststehendes Gegenstück. Die anderen Magnetbefestigungen, wie zum Beispiel der Mikrospritze und des Peristaltikpumpenteiles, sind allerdings nach oben bündig angeordnet.

Der auch außen angeordnete Ring weist Bereiche auf, welche im Wesentlichen die Reagenzgläser zur Herstellung von Verdünnungsreihen enthält. Einen weiteren Bereich des Rings ist für Patientenseren reserviert sowie ein dritter für die Reagenzien. Bei einer bevorzugten Ausführung ist es so, dass zwischen den in der Mitte liegenden Mikrotiterplatten auch noch ein Ring angeordnet ist, in dem Fluoreszenzreagenzgläser (auch Slides genannt) angeordnet sind. Diese Slides können ebenfalls mittels dieser Vorrichtung mit Nadelsystem beschickt werden und dann in einem späteren Schritt von einem hierfür geeigneten Fachmann ausgelesen werden. Im Übrigen gilt dies auch für die Mikrotiterplatten, da das Analysegerät selbst keine Elemente zur Auswertung von einzelnen Tüpfel Vertiefungen/ Wells enthält. Es handelt sich hierbei daher um eine Art Halbautomat. In einer bevorzugten Ausführungsform hat das Analysegerät in seinem hinteren Teil eine Vorrichtung zum Lesen von Barcodes. Beim Arzt werden die einzelnen entnommenen Seren mit einem Barcode des Patienten versehen, das Analysegerät die Daten mittels einer Software verbinden und dann gleich feststellen kann, welcher Test bzw. welches Experiment oder welches Serum mit welchen Reagenzien beschickt werden soll. Auf diese Weise ist auch ein Testen von verschiedenen Erkrankungen bei einem oder mehreren Patienten gleichzeitig möglich.

Die Barcode-Lesevorrichtung wird auch dazu verwendet, die einzelnen rundförmigen Reagenzglasständer (auch "Racks" genannt) zu kennzeichnen. Es ist nämlich so, dass unterschiedliche Kunden unterschiedlich dicke Reagenzgläser verwenden und so das Analysegerät erkennen kann, ob es sich hierbei um einen "Rack" mit wenigen dicken Reagenzgläsern oder ein "Rack" mit vielen dünnen, eng nebeneinander liegenden Reagenzgläsern handelt und damit entsprechend die Drehung nahe der Probenentnahme steuern kann. Auch die "Racks" werden mittels Magneten in ihrer Verankerung gehalten (zusätzlich zu Löchern im Bodenteil). An der Rückseite des Gerätes sind Anschlussvorrichtungen für Flaschen oder Auffangbehälter für die abgesaugten Flüssigkeiten angeordnet, ebenso wie Anschlussmöglichkeiten für Waschlösungen etc. Auf der Rückseite des Analysegerätes, eine Anschlussstelle für eine Datenverarbeitungsanlage bzw. für einen Personal Computer (PC), insbesondere eine USB-Schnittstelle. Das ganze Analysegerät wird mittels einer 24 Volt Anlage betrieben, das heißt, außerhalb des Gerätes ist ein entsprechender Transformator gelagert.

Darüber hinaus enthält das Analysegerät ein Detektionsvorrichtung, welche anzeigt, sobald ein Reagenz erschöpft bzw. ein Reagenzglas geleert ist. Dabei merkt sich der PC die Stelle des Reagenzglases, schaltet ein am Rande blinkendes oder leuchtendes Markierungslicht an und dreht die leere Flasche dann direkt bis zum Markierungslicht. Ein Benutzer muss dann nicht erst nach der leeren Flasche suchen, sondern weiß, dass sich diese beim, blinkenden Licht befindet.

Weiterhin ist in dem Analysegerät auch ein Indikator vorgesehen, welcher durch Wechsel der Beleuchtungsfarbe entsprechende Probleme anzeigt. So ist es beispielsweise möglich bei dem bereits zuvor besprochenen Anzeigen eines leeren Reagenzes auch durch entsprechende Farbe der Anzeigevorrichtung anzugeben, welches Problem bei dem Reagenz vorliegt, zum Beispiel bei rot liegt eine Störung vor, bei gelb beispielsweise, wenn der Puffer zu Ende ist, etc. Dies lässt sich auch auf die Gesamtbeleuchtung der Vorrichtung übertragen, so dass bei einer Störung ein Farbwechsel der im Gerät vorhandnen unterschiedlichen Leuchtdioden erfolgt, wodurch auch gleich die Art der Störung anzeigt wird.

Da das Schlauchteil der Peristaltikpumpe mit den Magneten in Position gehalten wird, kann es somit leicht von einem Benutzer ersetzt werden kann. Dadurch ist auch ein einfaches Wechseln der innen liegenden Schlauchstücke möglich, wodurch eine schnelle Reagenzzugabe nach dem letzten Waschschritt möglich ist.

Durch die Anordnung der Dispensiernadel neben der Absaugnadel, ist es möglich direkt nach dem Absaugen Reagenz zuzugeben. Dies ist sehr vorteilhaft, da andere Geräte die Mikrotiterplatte erst aus der Waschstation nehmen müssen, um Reagenz zuzugeben. Durch diese direkte Zugabe von Reagenz ist es unmöglich, dass der empfindliche Probenboden austrocknet und Resultate dadurch verfälscht werden können.

Durch seine Helmform soll das Analysegerät dem Kunden ein Gefühl der Sicherheit der automatischen Prozesse vermitteln. Außerdem kann ein hörbarer (Audioalarm) und ein visueller Alarm sowie eine direkte Fehleranzeige im Karussell vorgesehen werden. Bei Gerätefehlern oder Benutzerrfehlern wird der Audioalarm zusätzlich durch blinkende Leuchtdioden (LED's) unterstützt. Das Karussell fährt automatisch an die Stelle der Fehler anzeigenden LED, um dem Kunden die schnelle Behebung des Fehlers zu ermöglichen.

Das erfindungsgemäße. Analysegerät hat vorzugsweise einen autonomen Prozessor, der in der Lage ist, die komplette Routine eines Autoimmunitätslabors und infektiösen Serologielabors zu steuern. Seine Plattenkapazität umfasst vorzugsweise zwei Mikrotiterplatten. Seine Slide-Kapazität: umfasst vorzugsweise 20 Objektträger, die auch verschiedene Formen aufweisen können. Das minimal aufgenommene Probenvolumen beträgt 1 µl. Das minimal aufgenommene Probenvolumen einem Proberöhrchen beträgt vorzugsweise bei Elisa 100 µl und bei IFA 50 µl. Die Inkubationstemperatur beträgt vorzugsweise 23° - 40°C. Der LIS Link entspricht den ASTM-Standards, Als Computersoftware werden vorzugsweise die Betriebssysteme Windows 2000, Windows XP und Vista, unterstützt. Zum Betrieb des Analysators ist vorzugsweise eine externe 24-Volt-Stromversorgung vorgesehen.

Eine beispielhafte erste Ausführungsform der erfindungsgemäßen Vorrichtung zum Untersuchen von biologischen und chemischen Proben wird nun an Hand von schematischen, den Umfang der Erfindung nicht einschränkenden Zeichnungen näher erläutert, wobei in allen Zeichnungen dieselben Bezugszeichen verwendet werden. Dabei zeigen:
- Fig. 1: eine perspektivische Gesamtansicht des ersten Ausführungsform einer erfindungsgemäßen Vorrichtung zum Untersuchen von biologischen und chemischen Proben mit einem helmförmigen Gerätegehäuse mit aufgeklapptem visierähnlichem Deckel,
- Fig. 2: eine perspektivische Gesamtansicht der erfindungsgemäßen Vorrichtung von Fig. 1 mit geschlossenem visierähnlichem Deckel, in einer Ansicht schräg von vorne,
- Fig. 3: eine perspektivische Gesamtansicht der erfindungsgemäßen Vorrichtung von Fig. 1 mit geschlossenem visierähnlichem Deckel, jedoch Ansicht schräg von hinten,
- Fig. 4: eine perspektivische Gesamtansicht der erfindungsgemäßen Vorrichtung von Fig. 1, jedoch mit herausgenommenem vertikalem Hohlnadelantrieb,
- Fig. 5: eine perspektivische Teilansicht der erfindungsgemäßen Vorrichtung von Fig. 1, wobei gegenüber der Gesamtansicht von Fig. 4 das helmförmige und die drehbare Arbeitsplatte entfernt sind,
- Fig. 6: eine perspektivische Teilansicht der erfindungsgemäßen Vorrichtung von Fig. 1, wobei nur die drehbare Arbeitsplatte mit einer aufgesetzten Mikrotiterplatte dargestellt ist,
- Fig. 7: eine perspektivische Teilansicht der erfindungsgemäßen Vorrichtung von Fig. 1, wobei nur ein äußerer Reagenzträgerring dargestellt ist,
- Fig. 8: eine Seitenansicht in Richtung A auf die erfindungsgemäße Vorrichtung von Fig. 1, ohne helmförmiges und ohne äußere Verkleidung des Nadelsystems mit darunter liegenden Motoren für jeweils eine ringförmige Arbeitsplatte,
- Fig. 9: eine Rückansicht in Richtung B auf die in Fig. 8 gezeigte Seitenansicht der erfindungsgemäßen Vorrichtung von Fig. 1,
- Fig. 10: eine perspektivische Ansicht auf das Nadelsystem mit äußerer Verkleidung der erfindungsgemäßen Vorrichtung von Fig. 1 mit Antrieb für Schlauchpumpe,
- Fig. 11: eine perspektivische Ansicht auf das in Fig. 10 gezeigte Nadelsystem, jedoch mit abgenommener äußerer Verkleidung der erfindungsgemäßen Vorrichtung von Fig. 1,
- Fig. 12: eine Draufsicht auf die die drei Hohlnadeln haltende Halteplatte des in Fig. 11 gezeigten Nadelsystems, wobei die relativ zu den beiden anderen Hohlnadeln verschiebbar angeordnete mittlere Hohlnadel einen Zahnstangenaufsatz zeigt,
- Fig. 13: eine Draufsicht auf die die drei Hohlnadeln haltende Halteplatte des in Fig. 11 gezeigten Nadelsystems, wobei die relativ zu den beiden anderen Hohlnadeln verschiebbar angeordnete mittlere Hohlnadel aus der Halteplatte herausgezogen ist,
- Fig. 14: zwei Seitenansicht auf die Pipettenspitzen der drei Hohlnadeln der erfindungsgemäßen Vorrichtung von Fig. 1, links in abgesenkter Position innerhalb eines Töpfchens bzw. Wells während des Waschvorganges und rechts in angehobener Position bei der Zugabe von Reagenzien.
- Fig. 15-18: mehrere perspektivische Ansichten der Peristaltikpumpe und deren Einzelteile der erfindungsgemäßen Vorrichtung von Fig. 1.

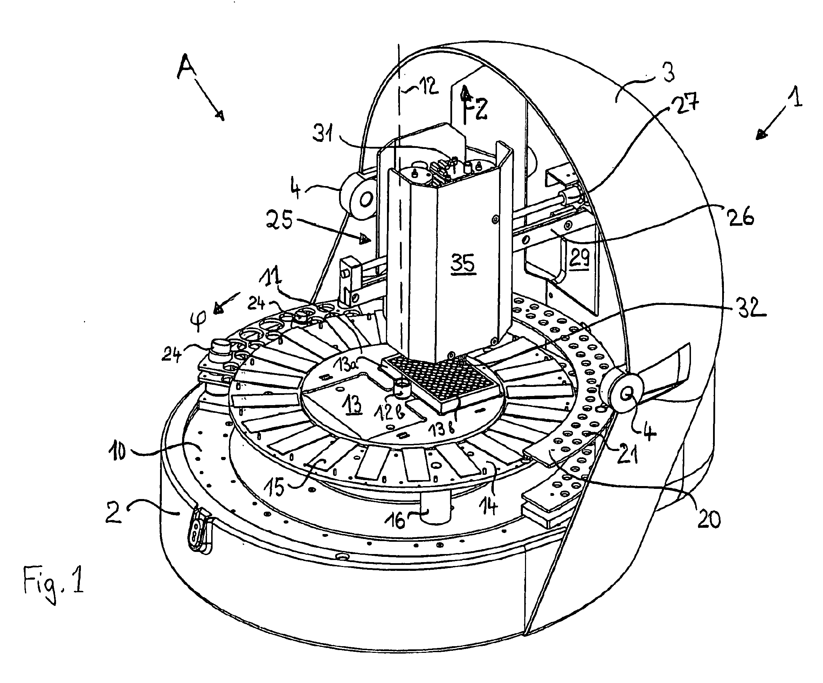

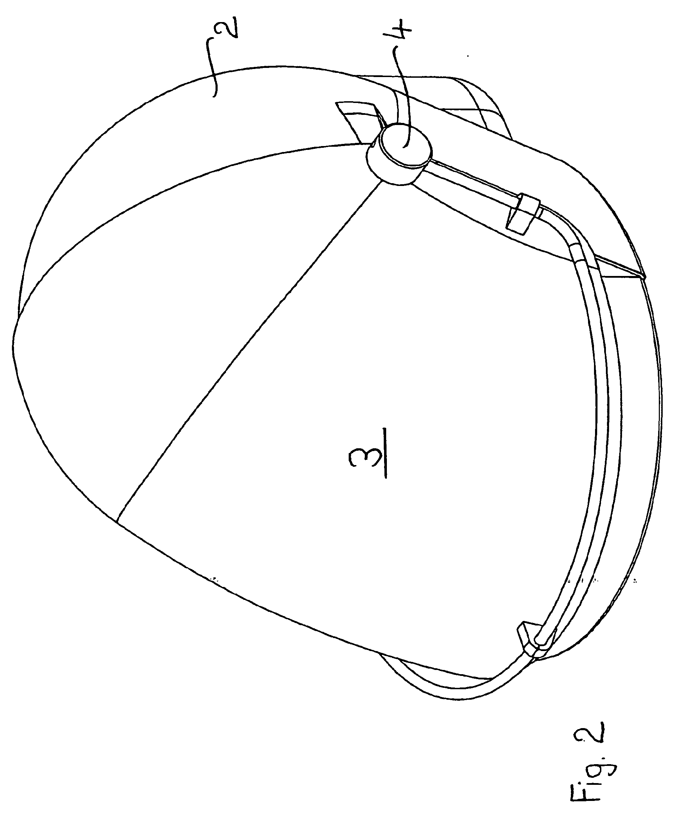

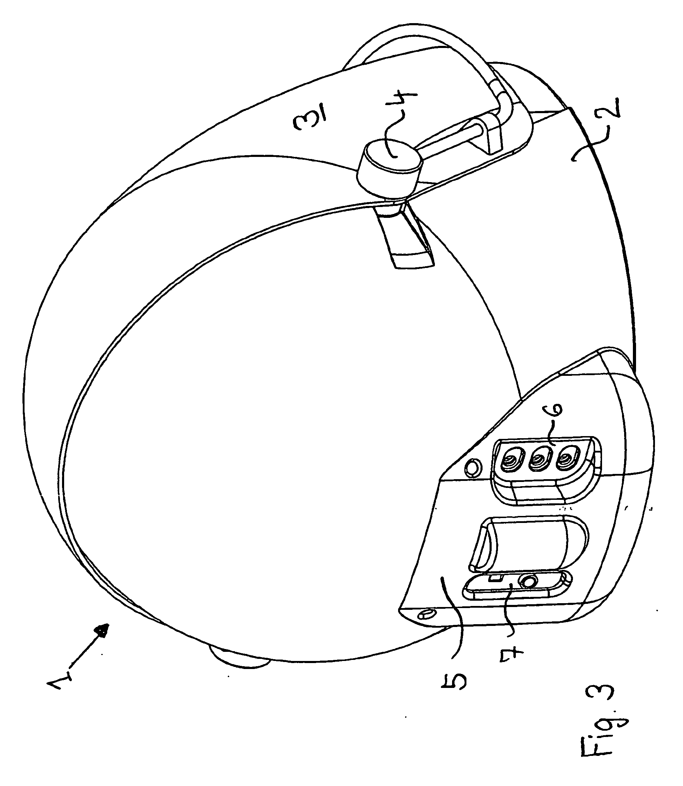

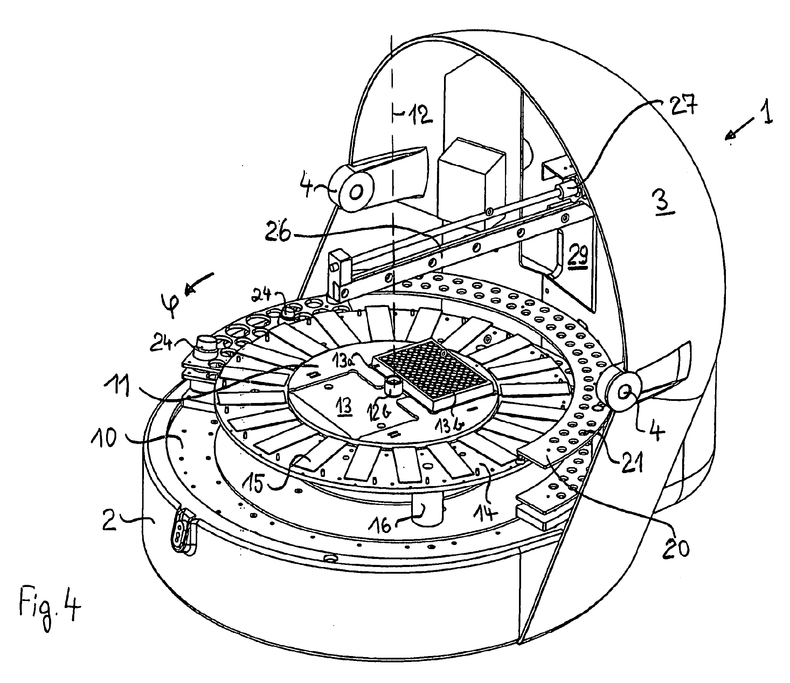

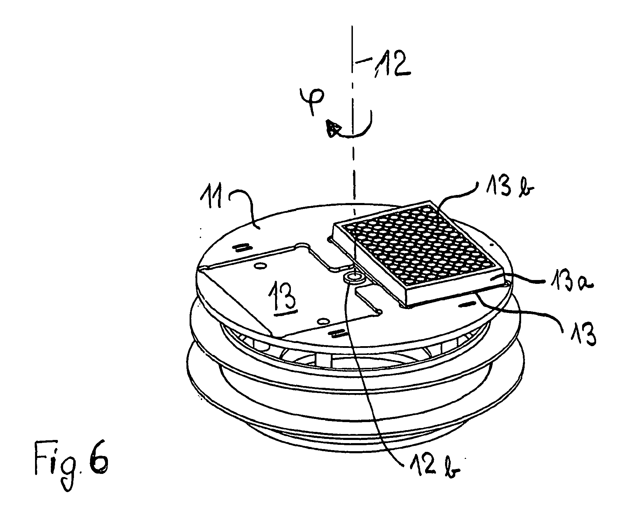

Fig. 1 zeigt eine perspektivische Gesamtansicht einer erfindungsgemäßen Vorrichtung 1 zum Untersuchen von biologischen und chemischen Proben, die als Analysegerät eingesetzt wird. Die Vorrichtung 1 hat ein helmförmiges Gerätegehäuse 2 mit einem aufgeklappten visierähnlichen Deckel 3, der um zwei Drehgelenke 4 auf- und zugeklappt werden kann. Fig. 2 zeigt diesen zugeklappten Zustand mit einer Ansicht von schräg vorne, während Fig. 3 diesen zugeklappten Zustand von schräg hinten zeigt. Auf der Rückseite 5 des Gerätegehäuses 2 befinden sich die elektrischen Steckeranschlussleisten 6 und 7, an die diverse Stecker für das elektrische 24 V Netz, für die elektrischen Steuersignale zu einer Datenverarbeitungsanlage (Personal Computer) und für Messsignale (insbesondere eine USB-Schnittstelle) angeschlossen werden. Das Gerätegehäuse 1 weist eine Grundplatte 10 auf, die eine in Gebrauch horizontal angeordnete Arbeitsplatte 11 - oft auch Karussell genannt - trägt, die um ihre vertikale Achse 12 von einem Motor oder Antrieb in eine vorgegebene Winkelstellung ϕ gedreht werden kann. Auf dieser inneren Arbeitsplatte 11 sind zwei rechteckige Aussparungen 13 zur Aufnahme zweier Probenbehälter 13a vorgesehen, wobei nur ein Probenbehälter 13a aufgesetzt ist, der in einer Matrixanordnung eine Vielzahl von Töpfchen bzw. Wells 13b enthält (wie in Fig. 6 besser ersichtlich): Diese innere Arbeitsplatte 11 wird in radialer Richtung durch eine ringförmige Arbeitsplatte 14 erweitert, auf der in Umfangsrichtung durchsichtige Objektträgern 15 angeordnet sind, die biologische oder chemische Proben jeweils tragen. Diese ringförmige Arbeitsplatte 14 ist mittels Stützen 16 auf der Grundplatte 10 befestigt. Diese ringförmige Arbeitsplatte 14 kann bei weiteren nicht dargestellten Ausführungsformen jedoch über einen separaten Drehantrieb gedreht werden bzw. mit der inneren Arbeitsplatte gemeinsam gedreht werden. Radial außerhalb dieser ringförmigen Arbeitsplatte 14 ist ein etwa halbkreisförmiger Reagenzglashalter 20 vorgesehen, der Löcher 21 für kleinere Reagenzgläser aufweist. Weiterhin ist im gleichen Umfangbereich auf der linken Seite der Fig. 1 (noch besser in Fig. 4 ohne Nadelsystem 31 zu sehen) ein etwa viertelkreisförmiger Reagenzglashalter 22 mit größeren Löchern 23 für größere Reagenzgläser 24 angeordnet.

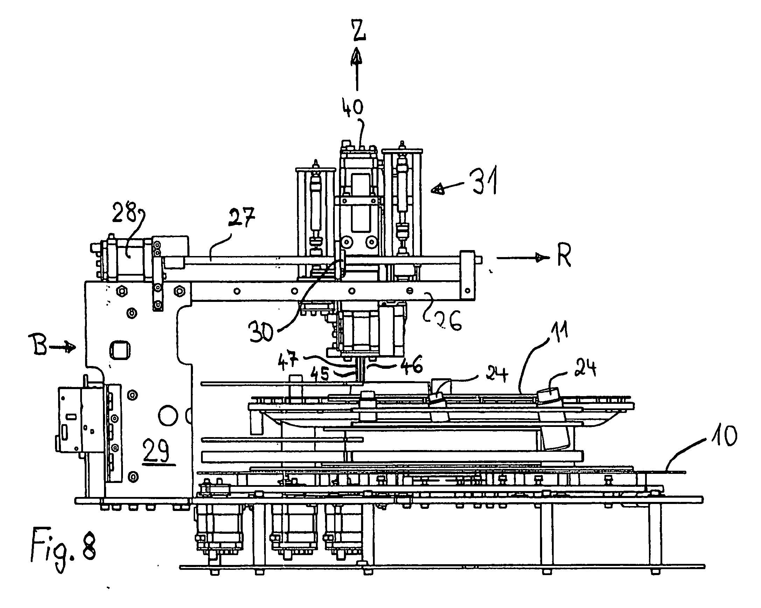

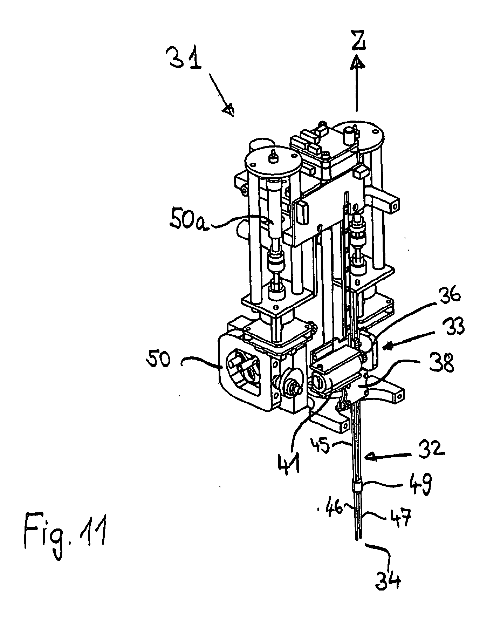

Oberhalb der inneren Arbeitsplatte 11 ist ein Robotermanipulator 25 angeordnet, der einen parallel zur inneren Arbeitsplatte 11 in einer horizontalen Richtung sich erstreckenden Tragarm 26 und einem entlang dieses Tragarmes 26 mittels eines horizontalen Spindelantriebes 27 bewegbaren Schlitten 30 (nur in Fig. 8 sichtbar) trägt. Dieser Schlitten 30 trägt einen in vertikaler Z-Richtung bewegbaren Nadelsystem 31 mit der Nadeleinheit 32, der von einem ersten vertikalen Antrieb 33 (in Fig. 11 ersichtlich) in vorgegebene vertikale Positionen gebracht werden kann. Hierdurch können die freien Spitzen 34 der Nadeleinheit 32 in einer oberen Position oberhalb und in einer unteren Position innerhalb eines Töpfchens bzw. Wells 13b eines Probenbehälters 13a positioniert werden. Der Nadelsystem 31 ist in Fig. 1 mit einer äußeren Verkleidung 35 dargestellt.

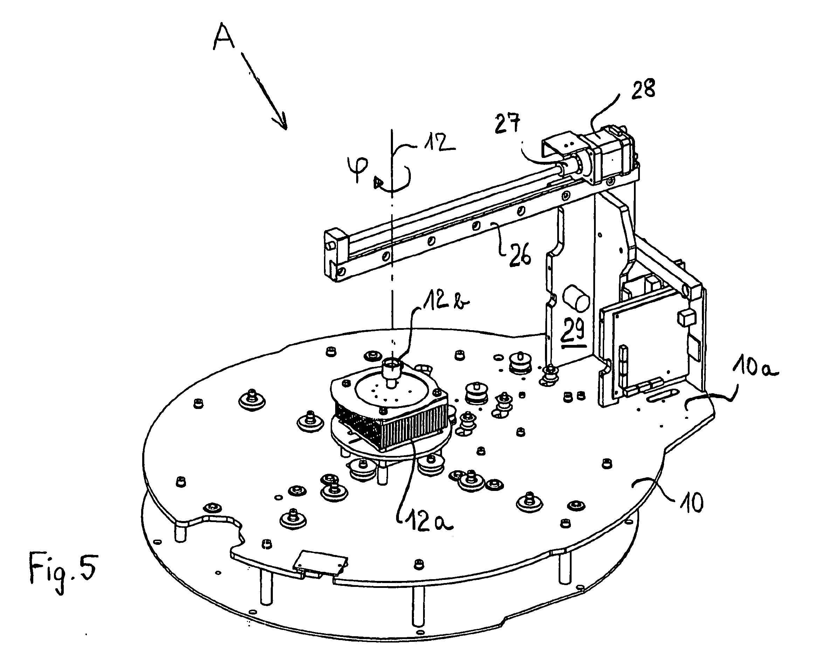

In Fig. 5 ist im Vergleich zu Fig. 4 durch Weglassen des helmförmigen Gerätegehäuses 2, der inneren Arbeitsplatte11, der ringförmigen Arbeitsplatte 14 (manchmal auch Karussell genannt) und der Reagenzglashalter 20 und 22 ist der Spindelantrieb 27 des Robotermanipulators 25 und der Drehantrieb 12a besser erkennbar. Die innere Arbeitsplatte 11 weist eine Reinigungs- bzw. Wascheinheit 12b zum Reinigen der Hohlnadeln auf, die über der Kühleinrichtung 12a (nur in Fig. 5 dargestellt) befestigt ist. Der Spindelantrieb 27 wird von einem zweiten Antrieb bzw. Motor 28 angetrieben. Der hintere Randbereich 10a der Grundplatte 10 trägt einen Pfeiler 29, der wiederum den horizontalen Tragarm 26 trägt.

Fig. 6 zeigt eine perspektivische Teilansicht der inneren drehbaren Arbeitsplatte 11 mit den beiden rechteckigen Aussparungen 13 zur Aufnahme zweier Probenbehälter 13a. Jedoch ist nur ein Probenbehälter 13a zur besseren Anschaulichkeit dargestellt.

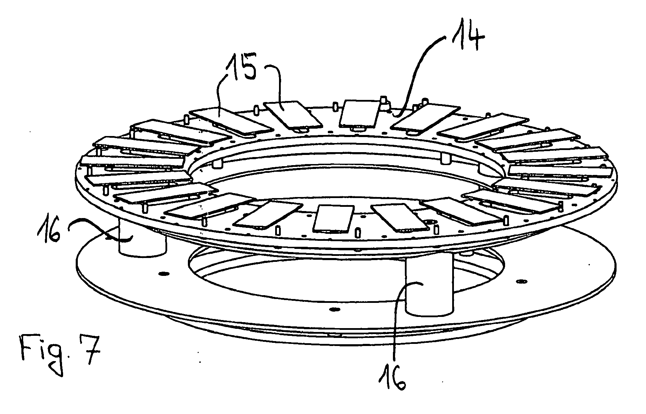

Fig. 7 zeigt die ringförmige Arbeitsplatte 14, auf der in Umfangsrichtung durchsichtige Objektträger 15 angeordnet sind. Jeder dieser Objektträger 15 trägt nicht dargestellte. Proben bzw. Reagenzien.

Fig. 8 zeigt eine Seitenansicht in Richtung A der Vorrichtung 1 der Fig. 1, wobei zur besseren Anschaulichkeit das helmförmige Gerätegehäuse 2 und die äußere Verkleidung 35 des Nadelsystems 31 weggelassen worden ist. Hieraus ist deutlich der oben beschriebene Aufbau des Tragarmes 26 mit dem Pfeiler 29 über der Grundplatte 10 ersichtlich. Insbesondere ist am Tagarm 26 das Nadelsystem 31 mit der Nadeleinheit 32 befestigt, der vom zweiten Elektromotor 28 über den Spindelantrieb 27 und den Schlitten 30 im Wesentlichen in radialer Richtung R verschiebbar ist.

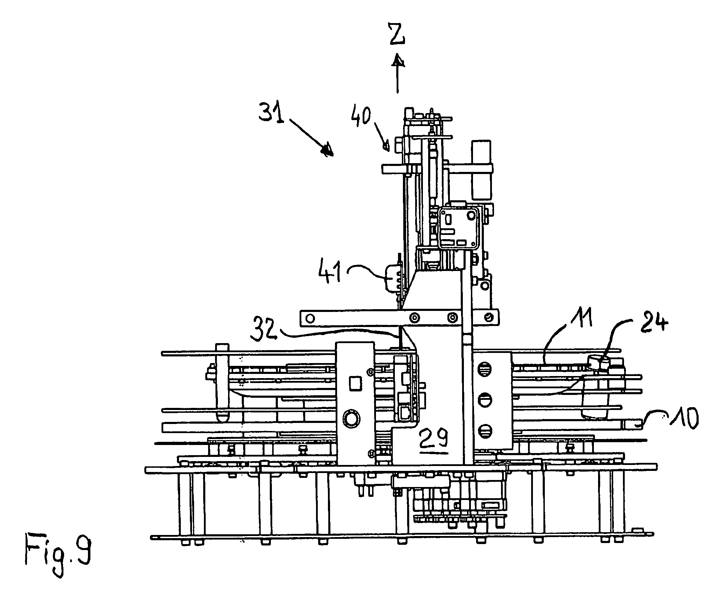

Im oberen Bereich des Nadelsystems 31 befindet sich ein dritter Elektromotor 40, der den ersten vertikalen Antrieb bildet und der über einen Antrieb, z. B. Gewindespindel oder Zahnrad das gesamte Nadelsystem 31 in vertikaler Richtung Z positionieren kann. Das ist auch gut ersichtlich aus Fig. 9, die die Rückansicht in Richtung des Pfeils B auf die in Fig. 8 gezeigte Vorrichtung zeigt. Zusätzlich in Fig. 9 ist ein vierter Elektromotor 41 erkennbar, der die mittlere Hohlnadel 45 relativ zu den beiden seitlichen Hohlnadeln 46 und 47 in vertikaler Richtung Z verschieben kann.

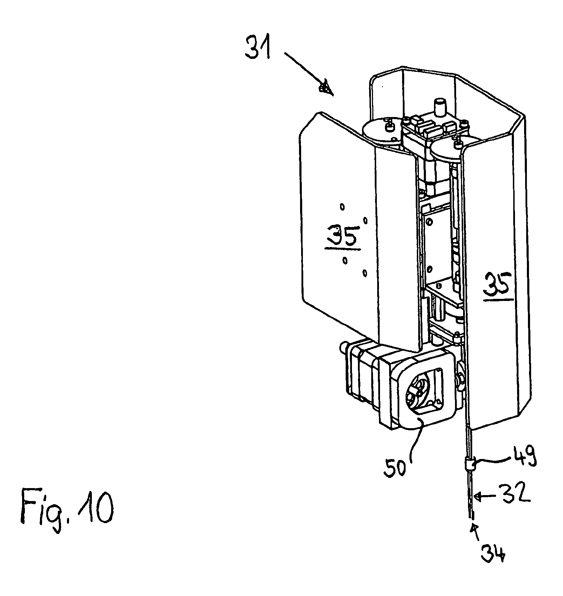

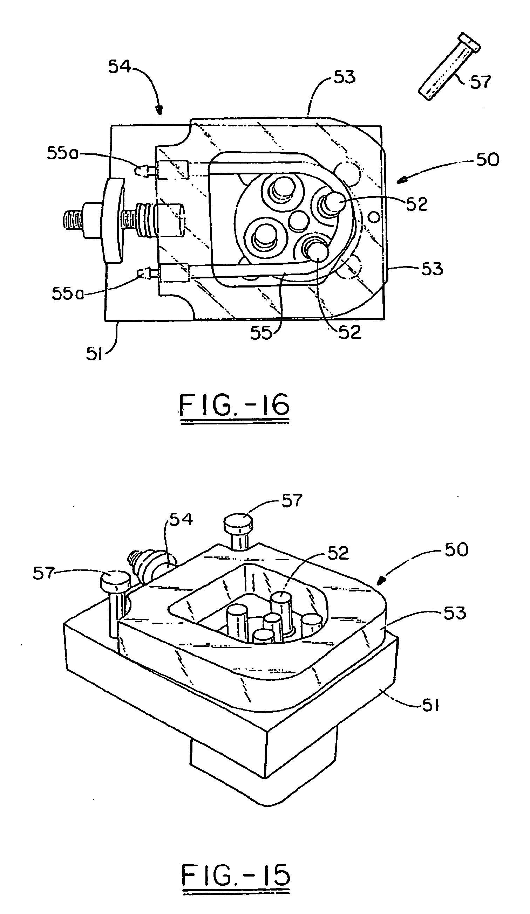

Fig. 10 zeigt vergrößert eine perspektivische Ansicht des Nadelsystems 31 mit seiner äußeren Verkleidung 35. Nach unten ragt die Nadeleinheit 32 mit der mittleren Hohlnadel 45 und den zwei seitlichen Hohlnadeln 46 und 47 heraus. Die drei Hohlnadeln werden durch ein zylinderförmiges Führungsteil 49 im herausragenden Bereich der Nadeleinheit 32 auf sehr kleinem Abstand parallel gehalten. Im linken unteren Teil der Fig. 10 ist eine Peristaltikpumpe 50 (in Fig. 15 in vergrößertem Maßstab anschaulicher dargestellt), wodurch Flüssigkeit durch einen nicht dargestellten Zuführungsschlauch einer Hohlnadel gepumpt werden kann.

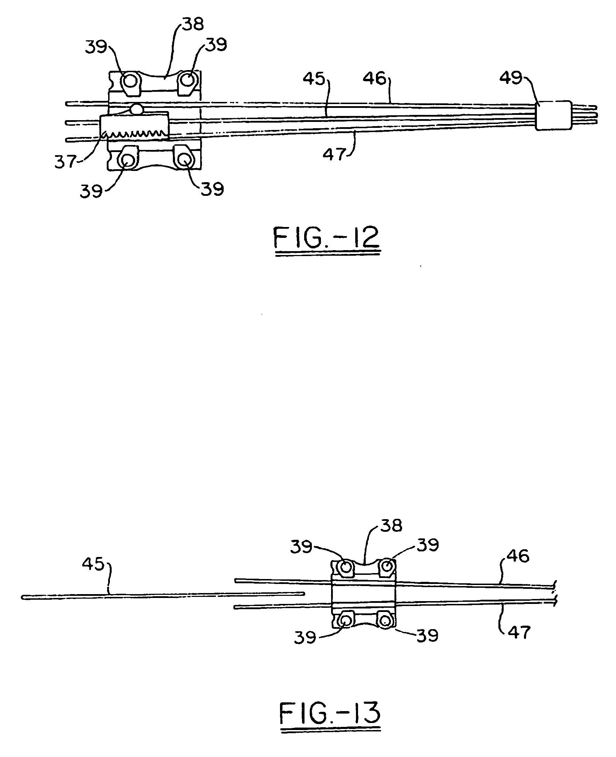

Fig. 11 zeigt eine perspektivische Darstellung des Nadelsystems 31 der Fig. 10 im gleichen vergrößerten Maßstab, jedoch ohne die äußere Verkleidung 35 und aus einem um etwa 90° nach rechts gedrehtem Blickwinkel. Hieraus ist die Funktion des Nadelsystems 31 am besten ersichtlich. Der vierte Elektromotor 41 als Teil des vertikalen Antriebs 33 verstellt über kleine Zahnräder 36 und einer an der mittleren Hohlnadel 45 befestigten Zahnstange 37 (in Fig. 11 hinter der Halteplatte 38 verdeckt, jedoch in Fig. 12 vergrößert ersichtlich) diese mittlere Hohlnadel 45 in vertikaler Richtung Z relativ in Bezug auf die beiden seitlichen Hohlnadeln 46 und 47. Hierdurch ist die mittlere Hohlnadel 45 in ihre dargestellte obere Position 55 gebracht worden, wodurch ihre untere freie Spitze um die Differenz Δ_{z} gegenüber den freien Spitzen 34 der beiden seitlichen Hohlnadeln 46 und 47 nach oben versetzt. Fig. 11 zeigt links unten die Peristaltikpumpe 50 aus der Fig. 10 mit einer zugehörigen Glasspritze 50a.

Fig. 12 zeigt eine Draufsicht auf eine herausgenommene Nadeleinheit 32 in vergrößertem Maßstab, bei der die Halteplatte 38 mit ihrer Außenseite auf dem Zeichnungsuntergrund liegt. Die beiden seitlichen Hohlnadeln 46 und 47 sind in der Halteplatte 38 festgehalten, während die mittlere Hohlnadel 45 mit ihrer Zahnstange 37 frei bewegbar auf der Halteplatte 38 gelagert ist. Die Halteplatte 38 trägt auf jeder Seite zwei ringförmige Magnete 39, die mit der am Nadelsystem 31 angebrachten Gegenplatte eine lösbare Verbindung bildet. Durch diese lösbare Verbindung geben die Magnete 39 beim unerwarteten Anstoßen der Nadeleinheit 32 an einen störenden Gegenstand innerhalb ihres Bewegungsbereiches im Gerätegehäuse die Halteplatte 38 frei, so dass die Halteplatte mit der daran befestigten Nadeleinheit 32 auf die Arbeitsplatte 11 herunterfallen kann.

Fig. 13 zeigt dieselbe Draufsicht auf die Halteplatte 38, wie in Fig. 12 gezeigt, jedoch ist die mittlere Hohlnadel 45 zur besseren Anschaulichkeit gerade aus der Halteplatte 38 herausgezogen.

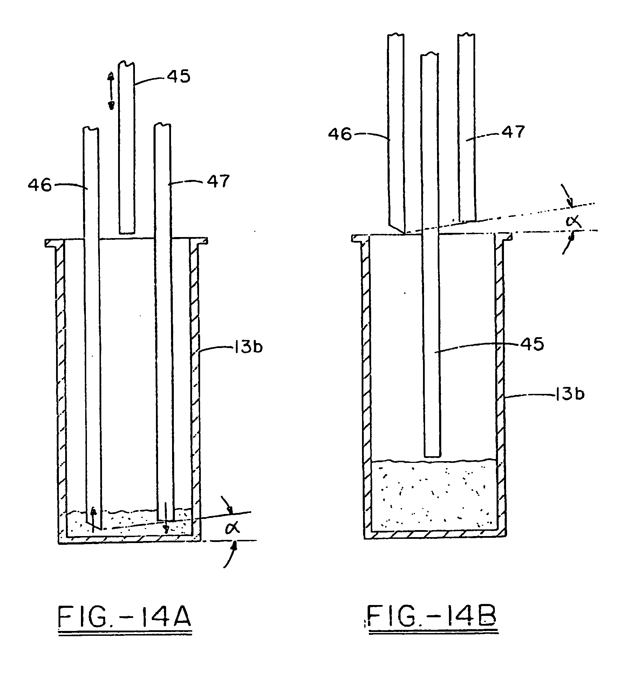

Fig. 14 zeigt zwei Seitenansichten auf die Spitzen 34 der drei Hohlnadeln 45, 46 und 47, wobei die linke Seitenansicht die drei Hohlnadeln 45, 46 und 47 jeweils in ganz abgesenkter Position innerhalb eines Töpfchens bzw. Wells 13b, während die rechte Seitenansicht die beiden seitlichen Hohlnadeln 46 und 47 in einer gemeinsamen, oberen Position und die mittlere Hohlnadel 45 innerhalb eines Töpfchens bzw. Wells 13b etwas oberhalb des Probenpegels. Die Spitzen der beiden seitlichen Hohlnadeln 46 und 47 liegen in der linken Seitenansicht auf einer Geraden, die einen spitzen Winkel α von vorzugsweise 1° bis 5° mit der Horizontalebene bildet. Durch die höher liegende Spitze der rechten seitlichen Hohlnadel 47 erfolgt die Zugabe von Reinigungsflüssigkeit und über die am tiefsten liegende Spitze der linken seitlichen Hohlnadel erfolgt die Absaugung der verschmutzten Flüssigkeit nach erfolgter Reinigung. Wie dargestellt, kann die mittlere Hohlnadel 45 durch ihr vertikales Antriebssystem 33 relativ zu den beiden seitlichen Hohlnadeln 46, 47 vertikal nach oben verschoben werden. Dabei zeigt die linke Seitenansicht den Zustand, bei dem gespült wird. Hier ist die mittlere Hohlnadel 45 oberhalb der Flüssigkeit. Die rechte Hohlnadel 47 (mit einer unten eben verlaufenden Öffnung) gibt die Waschflüssigkeit zu, während die linke Hohlnadel 46 (mit einer abgeschrägten Öffnung) die Flüssigkeit wieder absaugt. In rechten Seitenansicht wird dann die Befüllung mit Reagenz gezeigt, dazu wird das gesamte Nadelsystem 31 angehoben und die mittlere Hohlnadel 45 mittels dem zuvor beschriebenen ersten vertikalen Antrieb 33 nach unten geführt, worauf das Reagenz eingespritzt wird. Da sich in diesem Zustand die beiden äußeren Hohlnadeln oberhalb des Wells befinden, können diese die Reagenzflüssigkeit nicht kontaminieren.

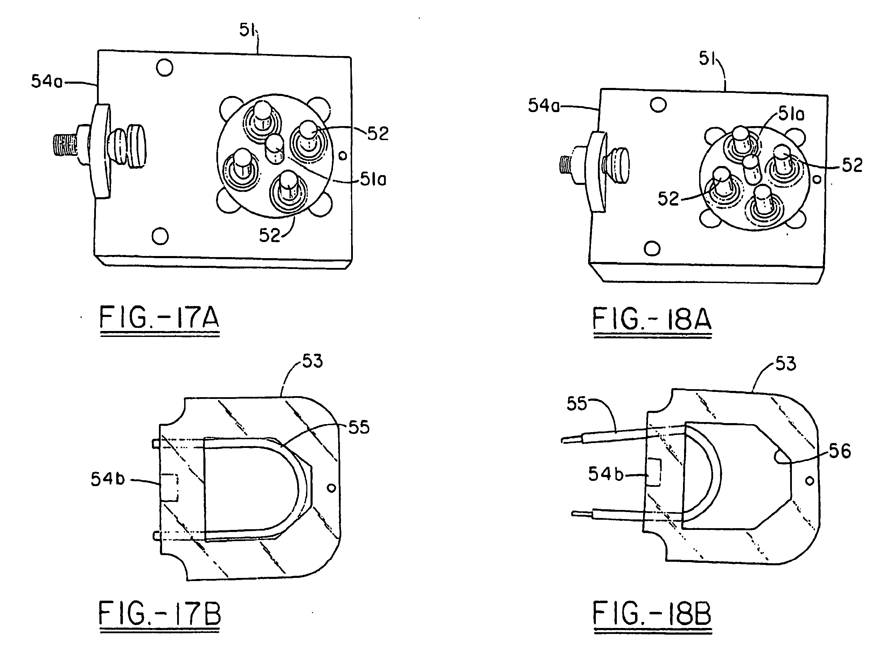

Fig. 15 zeigt eine stark vergrößerte perspektivische Ansicht der in den Fig. 10 und 11 gezeigten Peristaltikpumpe 50, während Fig. 16 im Wesentlichen eine Draufsicht auf diese Peristaltikpumpe 50 und Fig. 17 und 18 die Einzelteile besser darstellt. Die Peristaltikpumpe 50 besteht aus einem Antriebsteil 51 mit den um eine zentrale Achse 51 a rotierbaren vier Andruckrollen 52 und dem Schlauchteil 53, der mittels eines in der Figur 16 links angeordneten Magneten 54 mit seinen beiden Magnetteilen 54a und 54b befestigt ist, wodurch sich der Schlauchteil 53 mit einem Handgriff Antriebsteil 51 lösen und auswechseln lässt. Das aus Acryl hergestellte durchsichtige Schlauchteil 53 weist ein Schlauchstück 55 und mehrere innen liegende Gegenlager 56 auf, wobei das Schlauchstück 55 von den rotierenden Andruckrollen 51b gegen die damit zusammen wirkenden Gegenlager 56 gedrückt werden, wodurch die im Schlauchstück 55 vorhandene Flüssigkeit in Rotationsrichtung gepumpt wird. Wie aus Fig. 17 ersichtlich, kann somit auch leicht das Schlauchstück 55 selbst und seine auf dem Schlauchstückenden 55a aufgesteckten Koppelstücke 57, die beim Einbau in das Nadelsystem die Schlauchverbindung zu den Zuleitungsschläuchen herstellen, ausgewechselt werden.
In der Darstellung der Fig. 17 (links ist der Magnetteil 54b zu sehen) ist gezeigt, dass sich die Anschlüsse aus dem durchsichtigen Schlauchstück 55 der Peristaltikpumpe 50 leicht herausziehen lassen, worauf sich die Koppelstücke 57 und das Schlauchstück 53 vom abnehmbaren Schlauchteil 53 trennen lassen. Auf diese Weise ist das Schlauchstück 55 schnell und einfach zu entfernen und kann bei Reagenzienwechsel durch einen neuen Schlauch rasch und ohne Zeitaufwand ersetzt werden. Ein weiterer Grund zum Wechseln des Schlauchstückes 53 ist beispielsweise der Verschleiß, da er bei Peristaltikpumpen relativ groß ist. Da das Schlauchteil 53 der Peristaltikpumpe 50 mit den Magnetteilen 54a und 54b in Position gehalten wird, und kann es somit leicht von einem Benutzer ersetzt werden kann. Dadurch ist auch ein einfaches Wechseln der innen liegenden Schlauchstücke 55 möglich.

Bei einer nicht dargestellten zweiten erfindungsgemäßen Ausführungsform ist die Arbeitsplatte 11 nicht drehbar wie bei der ersten Ausführungsform gelagert. Die Töpfchen oder Wells 13b der Probenbehälter 13a sind in einer Linie angeordnet, die mit der Horizontalrichtung (X- oder Y-Richtung) des Robotermanipulator 25 zusammenfallen, womit dieser das Nadelsystem in jedes der auf dieser Linie angeordneten Töpfchen oder Wells 13b positionieren kann.

Bei einer nicht dargestellten dritten erfindungsgemäßen Ausführungsform ist die Arbeitsplatte 11 ebenfalls nicht drehbar wie bei der ersten Ausführungsform gelagert, sondern der Robotermanipulator 25 ist sowohl in die X- und als auch in die Y-Richtung mittels zweier Horizontalantriebe positionierbar. Damit können alle Proben auf einer nicht feststehenden zweidimensionalen Arbeitsplatte 11 angesteuert werden.

## Patentansprüche

1. Vorrichtung (1) zum Untersuchen von biologischen oder chemischen Proben mittels einer über eine Pipette zugeführten Reagenzflüssigkeit bzw. mittels einer Pipette zu- bzw. abgeführten Reinigungsflüssigkeit, wobei die Vorrichtung (1)
- ein Gerätegehäuse (2) mit einer Grundplatte (10),
- eine auf der Grundplatte (10) in Gebrauchslage horizontal angeordneten Arbeitsplatte (11) zur Aufnahme der Proben in einem mehrere Töpfchen bzw. Wells (13b) enthaltenden Probenbehälter (13a),
- einen in Gebrauchslage oberhalb der Arbeitsplatte (11) angeordneten Robotermanipulator (25), der einen oberhalb zur Arbeitsplatte (11) in einer horizontaler Richtung sich erstreckenden Tragarm (26) und einem entlang dieses Tragarmes (26) mittels eines horizontalen Antriebes (27) bewegbaren Schlitten (30) trägt, und
- ein am Schlitten (30) in vertikaler Richtung (Z) bewegbares Hohlnadelsystem (31) aufweist, das Pipetten (45, 46, 47) trägt und das von einem ersten vertikalen Antrieb (40) in vorgegebene vertikale Positionen gebracht werden kann, wodurch die freien Hohlnadelspitzen (34) in einer oberen Position oberhalb und in einer unteren Position innerhalb eines Töpfchens bzw. Wells (13b) eines Probenbehälters (13a) positioniert werden können,
**dadurch gekennzeichnet,**
- **dass** das Nadelsystem (31) drei die Pipetten bildenden, im Wesentlichen parallel, mit einem geringen Abstand zueinander verlaufende Hohlnadeln (45, 46, 47) in einer Halteplatte (38) trägt, die mit ihrem jeweiligen oberen Ende über eine Zuleitung mit einem zugeordneten Vorratsbehälter verbunden sind,
- **dass** eine der Hohlnadeln (45) relativ zu einer der anderen Hohlnadeln(46, 47) im Nadelsystem (31) vertikal verschiebbar angeordnet ist, die durch einen zweiten vertikalen Antrieb (41) in der vertikalen Richtung um einen vorgegebenen Wert angehoben und abgesenkt werden kann, und
- **dass** der horizontale Abstand der drei Hohlnadeln (45, 46, 47) zueinander so klein gewählt ist, dass alle drei Nadeln mit ihrer jeweiligen Hohlnadelspitze (34) innerhalb desselben Töpfchens bzw. Wells (13b) positioniert werden können.

2. Vorrichtung nach Anspruch 1, **dadurch gekennzeichnet,**
- **dass** die Arbeitsplatte (11) um ihre senkrecht dazu angeordnete Achse (12) auf der Grundplatte (10) drehbar gelagert ist, wobei die Arbeitsplatte (11) von einem Drehantrieb (12a) in eine vorgegebene Winkelstellung (φ) gedreht werden kann.

3. Vorrichtung nach den Vorrichtung nach Anspruch 2, **dadurch gekennzeichnet,**
- **dass** der sich in horizontaler Richtung erstreckende Tragarm des Robotermanipulators (25) derart angeordnet ist, dass die Pipetten über den durch den Horizontalantrieb (27) des Schlittens in radialer Richtung (R) auf die Rotationsachse (12) der Arbeitsplatte (11) zu- und wegbewegt werden können.

4. Vorrichtung nach Anspruch 1 oder 3, **dadurch gekennzeichnet,**
- **dass** der Horizontalantrieb (27), der erste Vertikalantrieb (40) und/oder der zweite Vertikalantrieb (41) und/oder der Rotationsantrieb (12a) jeweils über einen motorgetriebenen Antrieb von einer Steuerung angesteuert werden, wobei vorzugsweise der erste Vertikalantrieb (40) und/oder der zweite Vertikalantrieb (41) über einen motorgetriebenen Zahnradantrieb von einer Steuerung angesteuert werden.

5. Vorrichtung nach Anspruch 1 oder 3, **dadurch gekennzeichnet,**
- **dass** der Horizontalantrieb (27) und/oder der erste Vertikalantrieb (40) und/oder der zweite Vertikalantrieb (41) über einem Spindelantrieb von einer Steuerung angesteuert werden.

6. Vorrichtung nach Anspruch 1 oder 3, **dadurch gekennzeichnet,**
- **dass** die drei Hohlnadeln (45, 46, 47) in einer vertikalen Ebene (Z) gemeinsam angeordnet sind und
- **dass** die mittlere (45) der drei in der vertikalen Ebene oder in triangulärer Lage (Z) gemeinsam angeordneten Hohlnadeln die eine Hohlnadel ist, die relativ zu einer der äußeren Hohlnadeln (46, 47) im Nadelsystem (31) vertikal verschiebbar angeordnet ist, über die vorzugsweise die Reagenzflüssigkeit zugegeben wird.

7. Vorrichtung nach Anspruch 1 oder 3, **dadurch gekennzeichnet,**
- **dass** eine die Hohlnadelspitzen (34) von zwei Hohlnadeln (46, 47) in der jeweiligen unteren Position innerhalb eines Töpfchens bzw. Wells (13b) verbindende Gerade einen spitzen Winkel α, vorzugsweise einen spitzen Winkel α von 1° bis 5°, mit der Horizontalebene bildet, wobei vorzugsweise über die höher zu liegend kommende Hohlnadelspitze (47) die Abgabe von Reinigungsflüssigkeit und über die tiefer zu liegend kommende Hohlnadelspitze (46) die Absaugung von Schmutzflüssigkeit erfolgt (Fig. 14).

8. Vorrichtung nach Anspruch 7, **dadurch gekennzeichnet,**
- **dass** die eine Hohlnadelspitze der einen gegenüber einer der anderen Hohlnadeln (46, 47) vertikal verschiebbaren Hohlnadel (45) in der jeweiligen unteren Position innerhalb eines Töpfchens bzw. Wells (13b) zwischen der jeweils unteren und der jeweils oberen Position der zwei anderen Hohlnadeln zu liegen kommt, wobei über die Hohlnadelspitze der gegenüber einer der anderen Hohlnadeln vertikal verschiebbaren Hohlnadel (45) vorzugsweise die Reagenzflüssigkeit zugegeben wird.

9. Vorrichtung nach Anspruch 1 und vorzugsweise einem der anderen vorhergehenden Ansprüche, **dadurch gekennzeichnet,**
- **dass** eine die drei Hohlnadeln (45, 46, 47) tragende Halteplatte (38) mittels eines Haltemagneten (39) im Nadelsystem (31) derart lösbar gehalten werden, dass der Haltemagnet (39) die Halteplatte (38) beim unerwarteten Anstoßen der Hohlnadelspitzen bzw. der Hohlnadeln an einen im Gerätegehäuse (2) störenden Gegenstand innerhalb ihres Bewegungsbereiches frei geben kann, so dass die Halteplatte (38) mit den Hohlnadeln (45, 46, 47) auf die Arbeitsplatte (11) herunterfallen kann (Fig. 12, Fig. 13).

10. Vorrichtung nach Anspruch 1 und vorzugsweise einem der anderen vorhergehenden Ansprüche, **dadurch gekennzeichnet,**
- **dass** die beweglichen Zuleitungen, vorzugsweise als Schläuche ausgebildet, zwischen den jeweiligen oberen Enden jeder Hohlnadel (45, 46, 47) mit dem zugeordneten Vorratsbehälter über einen mittels einer Steuerung steuerbaren Hahn, vorzugsweise einen Zweiwegehahn oder einen Drei- oder Vierwegehahn, entsprechend verbunden sind und
- **dass** vorzugsweise der Flüssigkeitstransport in den als Schläuche ausgebildeten Zuleitungen jeweils von einer Schlauchpumpe, vorzugsweise einer Peristaltikpumpe (50), erfolgt (Fig. 10, Fig. 11, Fig. 15-18).

11. Vorrichtung nach Anspruch 1 und 10, **dadurch gekennzeichnet,**
- **dass** die als Peristaltikpumpe (50) ausgebildete Schlauchpumpe aus zwei magnetisch (54) gekoppelten und leicht lösbaren Hälften (51, 53) besteht, wodurch das innen liegende Schlauchstück (55), durch das die Flüssigkeit zwischen den durch einen Drehantrieb angetriebenen Andruckrollen (51b) und den entsprechenden Gegenlagern (56) transportiert wird, bei Verschleiß leicht gewechselt werden kann.

12. Vorrichtung nach Anspruch 1 oder 3, **dadurch gekennzeichnet,**
- **dass** weitere Proben in Reagenzgläsern (24) oder auf Objektträgern (15) auf der Grundplatte (10) angeordnet sind, vorzugsweise in einem äußeren Bereich der Arbeitsplatte (11), der außerhalb der Töpfchen bzw. Wells (13b) enthaltenden Probenbehälter (13a) angeordnet ist.

13. Vorrichtung nach Anspruch 3 und 12, **dadurch gekennzeichnet,**
- **dass** die weiteren Proben in Reagenzgläsern (24) oder auf Objektträgern (15) auf radialen äußeren Ringen (14) auf der um ihre Rotationsachse (12) drehbaren Arbeitsplatte (11) angeordnet sind, wobei die äußeren Ringe (14) jeweils mit der drehbaren Arbeitsplatte (11) fest verbunden sind oder einen eigenen steuerbaren Drehantrieb aufweisen und dass vorzugsweise die Proben durch einen Strichkode bzw. Barcode jeweils gekennzeichnet sind, die von entsprechenden Lesern gelesen werden können.

14. System zur Untersuchung von biologischen oder chemischen Proben mittels einer über eine Pipette zugeführten Reagenzflüssigkeit bzw. mittels einer über eine Pipette zu- bzw. abgeführten Reinigungsflüssigkeit, unter Verwendung einer Vorrichtung (1) nach einem der vorgehenden Ansprüche, **dadurch gekennzeichnet,**
- **dass** das Gerätegehäuse (2) die Form eines Helmes aufweist, der auf einer Seite einen visierähnlichen Deckel (3) trägt, der im aufgeklappten Zustand einer Bedienperson erlaubt, die Arbeitsplatte (11) mit Probenbehältern (13a) zu bestücken, und
- **dass** im geschlossenen Zustand des visierähnlichen Deckels (3) eine von einer Steuerung, vorzugsweise von einem Computer, gesteuerte Untersuchung der auf der Arbeitsplatte (11) angeordneten biologischen und chemischen Proben automatisch ablaufen kann.

15. Verfahren zum Untersuchen von biologischen oder chemischen Proben mittels einer über eine Pipette zugeführten Reagenzflüssigkeit, wobei die Proben in ihrem Probenbehältern (13a) jeweils gehalten werden, die auf der Arbeitsplatte (11) einer Vorrichtung (1) nach einem der vorhergehenden Ansprüche angeordnet sind,
**gekennzeichnet durch** folgende Schritte:
- die Proben in ihren jeweiligen Probenbehältern (13a) werden, vorzugsweise in Form einer Matrix, auf der in Gebrauchslage horizontale angeordneten Arbeitsplatte (11) eingebracht,
- das Nadelsystem wird mit seinen drei Hohlnadeln (45, 46, 47) **durch** den horizontalen Antrieb (27) in eine Stellung oberhalb eines zu untersuchenden Töpfchens bzw. Wells (13b) eines Probenbehälters (13a) mittels einer Steuerung positioniert,
- das Nadelsystem (31) wird **durch** den ersten vertikalen Antrieb (40) und den zweiten vertikalen Antrieb (41) soweit abgesenkt, so dass zuerst die erste Hohlnadel (45), die relativ zu einer der anderen Hohlnadeln (46, 47) vertikal verschiebbar angeordnet ist, in ihre untere Position abgesenkt wird, bei der sich deren Hohlnadelspitze innerhalb des Töpfchens bzw. Wells (13b) befindet, während sich die anderen beiden hohlen Hohlnadeln (46, 47) noch oberhalb des Töpfchens bzw. Wells (13b) befinden,
- dann wird die die Reagenzflüssigkeit der darin befindlichen Probe zugegeben,
- die erste Hohlnadel (45) wird **durch** den zweiten vertikalen Antrieb (41) wieder in eine obere Position weit genug oberhalb des Töpfchens bzw. Wells (13b) angehoben,
- dann werden die zweite und die dritte Hohlnadel (46, 47) gemeinsam mit dem ersten vertikalen Antrieb (40) soweit abgesenkt, bis sich deren Hohlnadelspitzen kurz oberhalb der Probe befinden,
- aus der Pipettenspitze der zweiten Hohlnadel(47) wird Reinigungsflüssigkeit über die Probe verteilt,
- mit der dritten Hohlnadel (46) wird die überschüssige, benutzte Reinigungsflüssigkeit abgesaugt,
- das Nadelsystem (31) wird über den ersten vertikalen Antrieb (40) in seine obere Position zurückgefahren,
- die Probe wird vorzugsweise in Bezug auf die Reaktion **durch** einen Lichtstrahl überprüft, wobei die Reaktion vorzugsweise **durch** einen Farbumschlag bestimmt wird,
- anschließend wird eine weitere Probe in einem weiteren Töpfchen bzw. Well (13b) in der gleiche Weise untersucht.

## Claims

1. A device (1) for examining biological or chemical samples using a reagent liquid supplied via a pipette or using a cleaning liquid supplied and removed respectively, via a pipette, said device (1) comprising:
- a device housing (2) with a base plate (10),
- a working plate (11) arranged horizontally on the base plate (10) when in operating position,
for accommodating the samples in a sample receptacle (13a) that contains multiple cups or wells (13b),
- a robot manipulator (25) arranged above the working plate (11) when in operating position, that carries a support arm (26) extending in a horizontal direction above the working plate (11) and a slide (30) which can move along said support arm (26) using a horizontal drive (27), and
- a system of hollow needles (31) that can move in a vertical direction (Z) on the slide (30), which system carries the pipettes (45, 46, 47) and which can be brought into predetermined vertical positions by a first vertical drive (40), such that the free tips (34) of the hollow needles can be placed in an upper position above and in a lower position within a cup or well (13b) of a sample receptacle (13a),
**characterized in**
- **that** the needle system (31) carries three hollow needles (45, 46, 47) forming the pipettes and arranged, essentially in parallel to each other, at a narrow spacing in a support plate (38), the upper ends of which needles are connected via a supply line to an associated reservoir container,
- **that** one of the hollow needles (45) is arranged so that it is movable vertically relative to one of the other hollow needles (46, 47) in the needle system (31), which can be raised and lowered by a predetermined value in a vertical direction by a second vertical drive (41), and
- **that** the horizontal spacing of the three hollow needles (45, 46, 47) from each other is chosen so small that all three needles can be positioned with their respective tips (34) inside the same cup or well (13b).

2. The device according to claim 1, **characterized in**
- **that** the working plate (11) is mounted on the base plate (10) pivotably around its axis (12) arranged perpendicular there to, whereby the working plate (11) can be rotated by a rotary drive (12a) to a predetermined angular position (φ).

3. The device according to claim 2, **characterized in**
- **that** the support arm of the robot manipulator (25) extending in a horizontal direction is arranged such that the pipettes can be moved in a radial direction (R) toward the axis of rotation (12a) of the working plate (11) and away therefrom by the horizontal drive (27) of the slide.

4. The device according to claim 1 or 3, **characterized in**
- **that** the horizontal drive (27), the first vertical drive (40), and/or the second vertical drive (41), and/or the rotary drive (12a) are each actuated via a motorized drive by a controller, whereby preferably the first vertical drive (40) and/or the second vertical drive (41) are actuated via a motorized gear drive by a controller.

5. The device according to claim 1 or 3, **characterized in**
- **that** the horizontal drive (27) and/or the first vertical drive (40) and/or the second vertical drive (41) are actuated via a spindle drive by a controller.

6. The device according to claim 1 or 3, **characterized in**
- **that** the three hollow needles (45, 46, 47) are arranged together in a vertical plane (Z), and
- **that** the middle one (5) of the three hollow needles arranged together in a vertical plane or in triangular position (Z) is the one hollow needle that is arranged such that it is movable vertically relative to one of the outer hollow needles (46, 47) in the needle system (31), whereby the reagent liquid is preferably supplied via the one needle.

7. The device according to claim 1 or 3, **characterized in**
- **that** a straight line joining the tips (34) of two hollow needles (46, 47) in the respective lower position inside a cup or well (13b) forms an acute angle a, preferably an acute angle α of 1° to 5°, with the horizontal plane, wherein the dispensing of the cleaning liquid preferably takes place via the hollow needle tip (47) as positioned higher, and the suction of the dirty liquid preferably takes place via the hollow needle tip (46) as positioned lower (Fig. 14).

8. The device according to claim 7, **characterized in**
- **that** the one hollow needle tip of the one hollow needle (45) being movable vertically with respect to one of the other hollow needles (46, 47) in the respective lower position within a cup or well (13b), is arranged between the respective lower and the respective upper position of the other two hollow needles, whereby the reagent liquid is preferably delivered via the one hollow needle tip of the one hollow needle (45) being movable vertically relative to one of the other hollow needles.

9. The device according to claim 1 and preferably according to any of the other preceding claims, **characterized in**
- **that** the support plate (38) carrying the three hollow needles (45, 46, 47) is detachably held by means of a support magnet (39) in the needle system (31) such that the support magnet (39) can release the support plate (38) in the event that the hollow needle tips or hollow needles unexpectedly hit within their range of motion, against an impending object in the device housing (2), so that the support plate (38) with the hollow needles (45, 46, 47) can drop down onto the working plate (11) (Fig. 12, Fig. 13).

10. The device according to claim 1 and preferably according to any of the other preceding claims, **characterized in**
- **that** the movable supply lines being preferably configured as hoses are connected between the respective upper ends of each hollow needle (45, 46, 47) with the associated reservoir container via a cock being controllable by a controller, preferably a two-way cock or a three- or four-way cock, and
- **that** preferably the liquid transport into the supply lines configured as hoses takes place by a respective hose pump, preferably a peristaltic pump (50) (Fig. 10, Fig. 11, Fig. 15-18).

11. The device according to claim 1 and 10, **characterized in**
- **that** the hose pump configured as a peristaltic pump (50) consists of two magnetically (54) coupled and easily detachable halves (51, 53), whereby the hose piece situated in the interior, through which the liquid is transported between the pressing rollers (51 b) actuated by a rotary drive and the corresponding abutments (56) can easily be replaced when worn out.

12. The device according to claim 1 or 3, **characterized in**
- **that** further samples are arranged in test tubes (24) or on test slides (15) on the base plate (10), preferably in an outer region of the working plate (11), which region is located outside the sample receptacle (13a) containing the cups or wells (13b).

13. The device according to claims 3 and 12, **characterized in**
- **that** the further samples are arranged in test tubes (24) or on test slides (15) on outer radial rings (14) on the working plate (11) being movable around its rotation axis (12), wherein the outer rings (14) are each firmly connected to the rotatable working plate (11) or have an own controllable rotary drive, and
- preferably the samples are each **characterized by** a barcode which can be read by corresponding readers.

14. A system for examining biological or chemical samples by means of a reagent liquid supplied via a pipette or by means of a cleaning liquid supplied and let away via a pipette, using a device (1) according to any of the preceding claims, **characterized in**
- **that** the device housing (2) has the shape of a helmet carrying on one side a visor-like cover (3), allowing in the open position the user to load the working plate (11) with sample receptacles (13a), and
- **that** in the closed position of the visor-like cover (3) an examination of the biological and chemical samples as arranged on the working plate (11) can run automatically, controlled by a controller, preferably by a computer.

15. A method for examining biological or chemical samples using a reagent liquid supplied via a pipette, wherein the samples being held in their sample receptacles (13a), which are arranged on the working plate (11) of the device (1) according to any of the preceding claims, **characterized by** the following steps:
- the samples are placed in their respective sample receptacles (13a), preferably in the form of a matrix, on the working plate (11) arranged horizontally in the operating position,
- the needle system with its three hollow needles (45, 46, 47) by the horizontal drive (27) by means of the controller is placed in a position above a cup or well (13b) of a sample receptacle (13a),
- the needle system (31) is lowered by the first vertical drive (40) and the second vertical drive (41) in such a way that first the one hollow needle (45) being vertical movably arranged with respect to one of the other hollow needles (46, 47) is lowered to its lower position, in which its hollow needle tip is located inside the cup or well (13b), while the other two hollow needles (46, 47) are still located above the cup or well (13b),
- then the reagent liquid is added to the sample located therein,
- the first hollow needle (45) is lifted again by the second vertical drive (41) into an upper position far enough above the cup or well (13b),
- then the second and third hollow needles (46, 47) are lowered together with the first vertical drive (40) into a position in which their tips are located just above the sample,
- from the pipette tip of the second hollow needle (47) cleaning liquid is distributed over the sample,
- with the third hollow needle (46) in excess, used cleaning liquid is sucked away,
- the needle system (31) is moved back to its upper position by the first vertical drive (40),
- the sample is preferably checked with respect to a reaction by a light beam, whereby the reaction is preferably determined by a colour change,
- then a futher sample in another cup or well (13b) is examined in the same way.

## Revendications

1. Un dispositif (1) d'analyse d'échantillons biologiques ou chimiques au moyen d'un liquide réactif ajouté à l'aide d'une pipette ou d'un liquide de nettoyage ajouté et retiré à l'aide d'une pipette, ledit dispositif (1) comportant
- un boîtier d'appareil (2) et une plaque de base (10),
- une plaque de travail (11) agencée sur la plaque de base (10) horizontalement en position d'utilisation pour recevoir les échantillons dans un récipient d'échantillons (13a) comportant plusieurs cupules ou puits (13b),
- un manipulateur de robot (25) agencé au-dessus de la plaque de travail (11) en position d'utilisation qui déplace le bras de transport (26) s'étendant dans la direction horizontale au-dessus de la plaque de travail (11) et un chariot (30) qui se déplace le long de ce bras de support (26) à l'aide d'un entraînement horizontal (27) et
- un système à aiguilles creuses (31) capable de se déplacer dans la direction verticale (Z) sur le chariot (30) qui transporte les pipettes (45, 46, 47) et qui peut être placé par le première entraînement vertical (40) dans des positions verticales prédéterminées afin que les pointes libres des aiguilles creuses (34) puissent être placées dans une position supérieure au-dessus et dans une position inférieure à l'intérieur d'une cupule ou d'un puits (13b) d'un récipient d'échantillons (13a),
**caractérisé en ce que**
- le système à aiguilles (31) déplace trois aiguilles creuses (45, 46, 47) formant les pipettes, essentiellement parallèles et faiblement espacées, sur une plaque de support (38) dont chacune des extrémités supérieures est connectée au réservoir affecté via une ligne d'alimentation,
- l'une des aiguilles creuses (45) est agencée de manière à pouvoir se déplacer verticalement par rapport à l'une des autres aiguilles creuses (46, 47) dans le système à aiguilles (31) et qu'elle peut être relevée et abaissée verticalement selon une valeur prédéfinie grâce à un second entraînement vertical (41) ;
- l'espacement horizontal sélectionné entre les trois aiguilles creuses (45, 46, 47) est si faible qu'elles peuvent être placées avec leurs pointes (34) respectives à l'intérieur de la même cupule ou du même puits (13b).

2. Le dispositif selon la revendication 1, **caractérisé en ce que**
- la plaque de travail (11) est agencée sur la plaque de base (10) de sorte qu'elle puisse pivoter autour de son axe (12) perpendiculaire à celle-ci, et la plaque de travail (11) peut être pivotée par un entraînement rotatif (12a) selon un angle prédéterminé (φ).

3. Le dispositif selon la revendication 2, **caractérisé en ce que**
- le bras de support du manipulateur de robot (25) s'étendant dans la direction horizontale est agencé de manière à ce que les pipettes puissent être déplacées d'avant en arrière par l'entraînement horizontal (27) du chariot dans la direction radiale (R) sur l'axe de rotation (12a) de la plaque de travail (11).

4. Le dispositif selon la revendication 1 ou 3, **caractérisé en ce que**
- l'entraînement horizontal (27), le premier entraînement vertical (40) et/ou le second entraînement vertical (41) et/ou l'entraînement rotatif (12a) sont chacun commandés par une commande au moyen d'un entraînement motorisé et, de préférence, le premier entraînement vertical (40) et/ou le second entraînement vertical (41) sont commandés par une commande au moyen d'un entraînement motorisé à roue dentée.

5. Le dispositif selon la revendication 1 ou 3, **caractérisé en ce que**
- l'entraînement horizontal (27) et/ou le premier entraînement vertical (40) et/ou le second entraînement vertical (41) sont commandés par une commande au moyen d'un vérin d'actionnement.

6. Le dispositif selon la revendication 1 ou 3, **caractérisé en ce que**
- les trois aiguilles creuses (45, 46, 47) sont agencées dans un plan vertical commun (Z) et
- l'aiguille creuse du milieu (5) parmi les trois agencées dans le plan vertical commun ou en position triangulaire (Z) est l'aiguille creuse agencée de sorte qu'elle puisse être déplacée verticalement par rapport à l'une des aiguilles creuses extérieures (46, 47) dans le système à aiguilles (31) et le réactif liquide est de préférence ajouté par celle-ci.

7. Le dispositif selon la revendication 1 ou 3, **caractérisé en ce que**
- une droite reliant les pointes (34) des deux aiguilles creuses (46, 47) dans leur position inférieure respective à l'intérieur d'une cupule ou d'un puits (13b) forme un angle aigu a, de préférence un angle aigu a compris entre 1° et 5° avec le plan horizontal, et de préférence la distribution du liquide de nettoyage se produit par la pointe de l'aiguille creuse située le plus haut et l'aspiration du liquide souillé par la pointe de l'aiguille creuse (46) située le plus bas (Fig. 14).

8. Le dispositif selon la revendication 7, **caractérisé en ce que**
- la pointe de l'aiguille creuse (45) qui peut se déplacer verticalement par rapport à l'une des autres aiguilles creuses (46, 47) vient se placer dans sa position inférieure respective à l'intérieur d'une cupule ou d'un puits (13b) entre les positions respectivement supérieure et inférieure des deux autres aiguilles creuses et le réactif liquide est de préférence ajouté via la pointe de l'aiguille creuse qui peut se déplacer verticalement par rapport à l'une des autres aiguilles creuses.

9. Le dispositif selon la revendication 1 et de préférence l'une des autres revendications ci-dessus, **caractérisé en ce que**
- la plaque de support (38) transportant les trois aiguilles creuses (45, 46, 47) est soutenue à l'aide d'un aimant (39) dans le système à aiguilles (31) et peut être desserrée de telle façon que l'aimant (39) puisse relâcher la plaque de support (38) dans sa zone de déplacement en cas de choc inattendu de la pointe de l'aiguille creuse ou des aiguilles creuses avec un objet parasite dans le boîtier d'appareil (2) afin que la plaque de support (38) puisse tomber avec les aiguilles creuses (45, 46, 47) sur la plaque de travail (11) (Fig. 12, Fig. 13).

10. Le dispositif selon la revendication 1 et de préférence l'une des autres revendications ci-dessus, **caractérisé en ce que**
- les lignes d'alimentation mobiles sont de préférence conçues comme des tuyaux et reliées entre les extrémités supérieures respectives de chaque aiguille creuse (45, 46, 47) avec le réservoir affecté à chacune d'elles par un robinet pouvant être commandé par une commande, de préférence un robinet à deux voies ou un robinet à trois ou quatre voies et,
- de préférence, le transport du liquide est effectué dans les lignes d'alimentation conçues comme des tuyaux au moyen d'une pompe, de préférence une pompe péristaltique (50) (Fig. 10, Fig. 11, Fig. 15-18).

11. Le dispositif selon la revendication 1 et 10, **caractérisé en ce que**
- la pompe péristaltique (50) se compose de deux moitiés (51, 53) facilement amovibles et couplées magnétiquement (54) afin que le tuyau souple (55) se trouvant à l'intérieur, à travers lequel le liquide est transporté entre les galets de pression (51 b) actionnés par un entraînement rotatif et les butées (56) correspondantes, soit remplacé facilement en cas d'usure.

12. Le dispositif selon la revendication 1 ou 3, **caractérisé en ce que**
- des échantillons supplémentaires sont agencés dans des tubes à essai (24) ou sur des porte-objets (15) situés sur la plaque de base (10), de préférence dans une zone extérieur de la plaque de travail (11) qui se trouve en dehors du récipient d'échantillons (13a) contenant les cupules ou les puits (13b).

13. Le dispositif selon la revendication 3 et 12, **caractérisé en ce que**
- les échantillons supplémentaires sont agencés dans des tubes à essai (24) ou sur des porte-objets (15) placés sur les anneaux radiaux extérieurs (14) de la plaque de travail (11) capable de tourner autour de son axe de rotation (12), les anneaux extérieurs (14) étant chacun fixés à la plaque de travail rotative (11) ou possédant leur propre entraînement rotatif contrôlable,
- et les échantillons sont de préférence chacun **caractérisés par** un code-barres et peuvent être lus par des lecteurs correspondants.

14. Un système d'analyse d'échantillons biologiques ou chimiques au moyen d'un réactif liquide ajouté à l'aide d'une pipette ou d'un liquide de nettoyage ajouté et retiré à l'aide d'une pipette utilisant un dispositif (1) conformément à l'une des précédentes revendications, **caractérisé en ce que**
- le boîtier d'appareil (2) a la forme d'un casque et présente d'un côté un couvercle (3) ressemblant à une visière et s'ouvrant pour permettre à l'utilisateur de placer des récipients d'échantillons (13a) sur la plaque de travail (11), et
- à l'état fermé du couvercle ressemblant à une visière (3), l'analyse des échantillons biologiques et chimiques placés sur la plaque de travail (11) peut être effectuée de façon automatique sous le contrôle d'un contrôleur, de préférence un ordinateur.

15. Le procédé d'analyse des échantillons biologiques ou chimiques au moyen d'un réactif liquide ajouté à l'aide d'une pipette où les échantillons sont chacun maintenus dans leurs récipients d'échantillons (13a), lesquels sont agencés sur la plaque de travail (11) d'un dispositif (1) conforme à l'une des revendications précédentes, **caractérisé par** les étapes suivantes :
- les échantillons sont placés dans leurs récipients d'échantillons (13a) respectifs sur la plaque de travail (11) agencée horizontalement en position d'utilisation, de préférence sous forme de matrice,
- le système à aiguilles avec ses trois aiguilles creuses (45, 46, 47) est placé à l'aide du contrôleur par l'entraînement horizontal (27) dans une position au-dessus d'une cupule ou d'un puits (13a) à analyser d'un récipient d'échantillon (13a),
- le système à aiguilles (31) est abaissé par le premier entraînement vertical (40) et le second entraînement vertical (41) de sorte que la première aiguille creuse (45), laquelle est agencée de manière à pouvoir se déplacer verticalement par rapport à l'une des autres aiguilles creuses (46, 47), est d'abord abaissée dans sa position inférieure où sa pointe est située à l'intérieur de la cupule ou du puits (13b), alors que les deux autres aiguilles creuses (46, 47) se trouvent encore au-dessus de la cupule ou du puits (13b),
- le réactif liquide est ensuite ajouté à l'échantillon se trouvant à l'intérieur,
- la première aiguille creuse (45) est relevée par le second entraînement vertical (41) dans une position supérieure suffisamment au-dessus de la cupule ou du puits (13b),
- les deuxième et troisième aiguilles creuses (46, 47) sont ensuite abaissées en même temps que le premier entraînement vertical (40) jusqu'à ce que leurs pointes soient juste au-dessus de l'échantillon,
- le liquide de nettoyage est réparti sur l'échantillon depuis la pointe de la pipette de la seconde aiguille creuse (47),
l'excès de liquide de nettoyage utilisé est aspiré avec la troisième aiguille creuse (46),
le système à aiguilles (31) est replacé dans sa position supérieure par le premier entraînement vertical (40),
- la réaction de l'échantillon est de préférence contrôlée par un faisceau lumineux, et de préférence déterminée par un changement de couleur,
- enfin, un autre échantillon est analysé de la même manière dans une autre cupule ou un autre puits (13b).
